(19) Europäisches Patentamt
European Patent Office
Office européen des brevets

(11) EP 2 888 308 B1

(12) **EUROPÄISCHE PATENTSCHRIFT**

(45) Veröffentlichungstag und Bekanntmachung des Hinweises auf die Patenterteilung:
**17.08.2016 Patentblatt 2016/33**

(21) Anmeldenummer: **13756070.2**

(22) Anmeldetag: **23.08.2013**

(51) Int Cl.:
***C08G 64/34*** (2006.01) ***C08G 65/26*** (2006.01)

(86) Internationale Anmeldenummer:
**PCT/EP2013/067578**

(87) Internationale Veröffentlichungsnummer:
**WO 2014/033070 (06.03.2014 Gazette 2014/10)**

(54) **VERFAHREN ZUR HERSTELLUNG VON POLYETHERCARBONATPOLYOLEN**

METHOD FOR MANUFACTURING POLYETHER CARBONATE POLYOLS

PROCÉDÉ DESTINÉ À LA FABRICATION DE POLYÉTHERCARBONATPOLYOLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.08.2012 EP 12181905**

(43) Veröffentlichungstag der Anmeldung:
**01.07.2015 Patentblatt 2015/27**

(73) Patentinhaber: **Covestro Deutschland AG**
**51373 Leverkusen (DE)**

(72) Erfinder:
- **MÜLLER, Thomas Ernst**
  **52062 Aachen (DE)**
- **GÜRTLER, Christoph**
  **50735 Köln (DE)**
- **WOHAK, Matthias**
  **41541 Dormagen (DE)**
- **HOFMANN, Jörg**
  **47800 Krefeld (DE)**
- **SUBHANI, Muhammad Afzal**
  **52066 Aachen (DE)**
- **LEITNER, Walter**
  **52074 Aachen (DE)**
- **PECKERMANN, Ilja**
  **50735 Köln (DE)**
- **WOLF, Aurel**
  **42489 Wülfrath (DE)**

(74) Vertreter: **Levpat**
**c/o Covestro AG**
**Alfred-Nobel-Straße 10**
**40789 Monheim am Rhein (DE)**

(56) Entgegenhaltungen:
**EP-A2- 0 222 453**
**WO-A1-03/029325**
**WO-A1-2011/089120**
**US-A1- 2011 230 580**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft ein Verfahren zur Herstellung von Polyethercarbonatpolyolen durch katalytische Copolymerisation von Kohlendioxid ($CO_2$) mit Alkylenoxiden in Gegenwart einer oder mehrerer H-funktioneller Startersubstanzen.

Die Herstellung von Polyethercarbonatpolyolen durch katalytische Umsetzung von Alkylenoxiden (Epoxiden) und Kohlendioxid in Anwesenheit von H-funktionellen Startersubstanzen ("Starter") wird seit mehr als 40 Jahren intensiv untersucht (z. B. Inoue et al, Copolymerization of Carbon Dioxide and Epoxide with Organometallic Compounds; Die Makromolekulare Chemie 130, 210-220, 1969). Diese Reaktion ist in Schema (I) schematisch dargestellt, wobei R für einen organischen Rest wie Alkyl, Alkylaryl oder Aryl steht, der jeweils auch Heteroatome wie beispielsweise O, S, Si usw. enthalten kann, und wobei e, f und g für eine ganzzahlige Zahl stehen, und wobei das hier im Schema (I) gezeigte Produkt für das Polyethercarbonatpolyol lediglich so verstanden werden soll, dass sich Blöcke mit der gezeigten Struktur im erhaltenen Polyethercarbonatpolyol prinzipiell wiederfinden können, die Reihenfolge, Anzahl und Länge der Blöcke sowie die OH-Funktionalität des Starters aber variieren kann und nicht auf das in Schema (I) gezeigte Polyethercarbonatpolyol beschränkt ist. Diese Reaktion (siehe Schema (I)) ist ökologisch sehr vorteilhaft, da diese Reaktion die Umsetzung eines Treibhausgases wie $CO_2$ zu einem Polymer darstellt. Als weiteres Produkt, eigentlich Nebenprodukt, entsteht das in Schema (I) gezeigte cyclische Carbonat (beispielsweise für R = $CH_3$ Propylencarbonat).

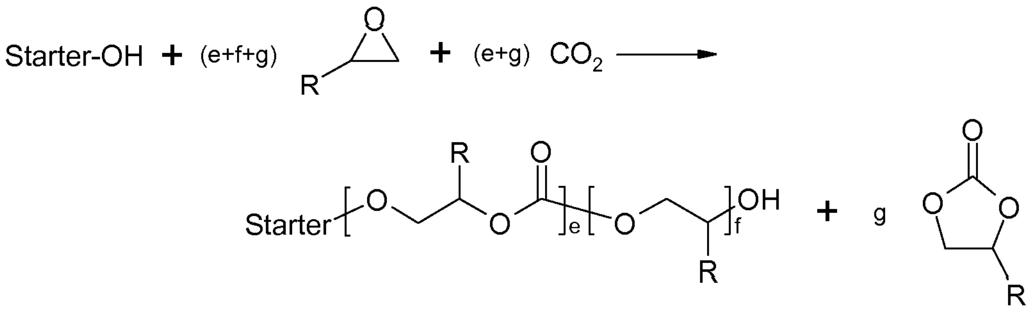

(I)

EP-A 0 222 453 offenbart ein Verfahren zur Herstellung von Polycarbonaten aus Alkylenoxiden und Kohlendioxid unter Verwendung eines Katalysatorsystems aus DMC-Katalysator und einem Co-Katalysator wie Zinksulfat. Dabei wird die Polymerisation initiiert, indem einmalig ein Teil des Alkylenoxids mit dem Katalysatorsystem in Kontakt gebracht wird. Erst danach werden die Restmenge Alkylenoxid und das Kohlendioxid simultan zudosiert. Die bei EP-A 0 222 453 für den Aktivierungsschritt in den Beispielen 1 bis 7 angegebene Menge von 60 Gew.-% Alkylenoxidverbindung relativ zur H-funktionellen Starterverbindung ist hoch und hat den Nachteil, dass dies für großtechnische Anwendungen aufgrund der hohen Exothermie der Homo-Polymerisation von Alkylenoxidverbindungen ein gewisses Sicherheitsrisiko darstellt.

WO-A 2003/029325 offenbart ein Verfahren zur Herstellung von hochmolekularen aliphatischen Polyethercarbonatpolyolen (gewichtsmittleres Molekulargewicht größer als 30000 g/mol), bei dem ein Katalysator aus der Gruppe bestehend aus Zinkcarboxylat und Multimetallcyanidverbindung eingesetzt wird, der wasserfrei ist und der zunächst mit zumindest einer Teilmenge des Kohlendioxids in Kontakt gebracht wird, bevor man das Alkylenoxid zufügt. $CO_2$-Enddrücke von bis zu 150 bar stellen sehr hohe Anforderungen an den Reaktor sowie an die Sicherheit. Selbst durch den überaus hohen Druck von 150 bar wurden nur ca. 33 Gew.-% $CO_2$ bis maximal 42 Gew.-% $CO_2$ eingebaut. Die dargelegten Beispiele beschreiben die Verwendung eines Lösemittels (Toluol), das nach der Reaktion wieder thermisch abgetrennt werden muss, was zu erhöhtem Zeit- und Kostenaufwand führt. Des Weiteren weisen die Polymere mit einer Uneinheitlichkeit bzw. Polydispersität von 2,7 oder mehr eine sehr breite Molmassenverteilung auf.

WO-A 2008/092767 offenbart ein Verfahren zur Herstellung von Polyethercarbonatpolyolen, dadurch gekennzeichnet, dass eine oder mehrere H-funktionelle Startersubstanzen im Reaktor vorgelegt werden und dass eine oder mehrere H-funktionelle Startersubstanzen während der Reaktion kontinuierlich in den Reaktor zudosiert werden. Dieses Verfahren hat also den Nachteil, dass eine oder mehrere H-funktionelle Startersubstanzen im Reaktor vorgelegt werden müssen.

Die US 2011/230580 A1 beschreibt ein Verfahren zur Herstellung von Polyethercarbonatpolyolen durch Anlagerung von Propylenoxid und Kohlendioxid an einen Dialkohol als Startersubstanz in Gegenwart eines DMC-Katalysators.

Es war daher Aufgabe der vorliegenden Erfindung, ein Verfahren zur Herstellung von Polyethercarbonatpolyolen bereitzustellen, bei dem keine H-funktionellen Startersubstanzen im Reaktor vorgelegt werden müssen, wobei das Verfahren zu einem Produkt führt, welches sowohl zu einem hohen Gehalt an eingebautem $CO_2$ im resultierenden Polyethercarbonatpolyol führt und wobei gleichzeitig eine günstige Selektivität (d.h. niedriges Verhältnis von cyclischem Carbonat zu linearem polymer gebundenen Carbonat) erreicht wird.

Überraschend wurde gefunden, dass die erfindungsgemäße Aufgabe gelöst wird durch ein Verfahren zur Herstellung von Polyethercarbonatpolyolen aus einer oder mehreren H-funktionellen Startersubstanz(en), einem oder mehreren Alkylenoxid(en) und Kohlendioxid in Gegenwart eines DMC-Katalysators, dadurch gekennzeichnet, dass

(α) ein Suspensionsmittel, das keine H-funktionellen Gruppen enthält und ausgewählt ist aus einer oder mehreren Verbindung(en) aus der Gruppe bestehend aus aliphatischen Lactonen, aromatischen Lactonen, Lactiden, cyclischen Carbonaten mit mindestens drei gegebenenfalls substituierten Methylengruppen zwischen den Sauerstoffatomen der Carbonatgruppe, aliphatischen cyclischen Anhydriden und aromatischen cyclischen Anhydriden, in einem Reaktor gegebenenfalls gemeinsam mit DMC-Katalysator vorgelegt wird,
(β) gegebenenfalls zu dem Gemisch aus Schritt (α) eine Teilmenge an Alkylenoxid bei Temperaturen von 90 bis 150°C zugegeben wird, und wobei dann die Zugabe der Alkylenoxidverbindung unterbrochen wird, und
(γ) eine oder mehrere H-funktionelle Startersubstanz(en) während der Reaktion kontinuierlich in den Reaktor zudosiert werden.

Bei dem erfindungsgemäßen Verfahren wird zunächst ein Suspensionsmittel, das keine H-funktionellen Gruppen enthält, im Reaktor vorgelegt. Anschließend wird die für die Polyaddition benötigte Menge an DMC-Katalysator, der bevorzugt nicht aktiviert ist, in den Reaktor gegeben. Die Reihenfolge der Zugabe ist dabei nicht entscheidend. Es kann auch erst der DMC-Katalysator und anschließend das Suspensionsmittel in den Reaktor gefüllt werden. Alternativ kann auch erst der DMC-Katalysator in dem inerten Suspensionsmittel suspendiert und anschließend die Suspension in den Reaktor gefüllt werden. Durch das Suspensionsmittel wird eine ausreichende Wärmeaustauschfläche mit der Reaktorwand oder im Reaktor eingebauten Kühlelementen zur Verfügung gestellt, so dass die freigesetzte Reaktionswärme sehr gut abgeführt werden kann. Außerdem stellt das Suspensionsmittel bei einem Kühlungsausfall Wärmekapazität zur Verfügung, so dass die Temperatur in diesem Falle unterhalb der Zersetzungstemperatur des Reaktionsgemisches gehalten werden kann.

Die erfindungsgemäß eingesetzten Suspensionsmittel enthalten keine H-funktionellen Gruppen und sind ausgewählt aus der Gruppe bestehend aus aliphatischen Lactonen, aromatischen Lactonen, Lactiden, cyclischen Carbonaten mit mindestens drei gegebenenfalls substituierten Methylengruppen zwischen den Sauerstoffatomen der Carbonatgruppe, aliphatischen cyclischen Anhydriden und aromatischen cyclischen Anhydriden. Als Suspensionsmittel kann auch eine Mischung aus zwei oder mehreren der genannten Suspensionsmittel eingesetzt werden.

**Aliphatische oder aromatische Lactone** in Sinne der Erfindung sind cyclische Verbindungen enthaltend eine Esterbindung im Ring, vorzugsweise Verbindungen der Formeln (II), (III) oder (IV),

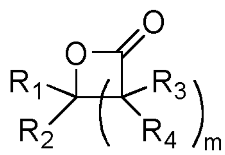
(II)

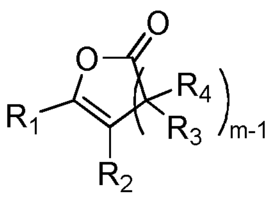
(III)

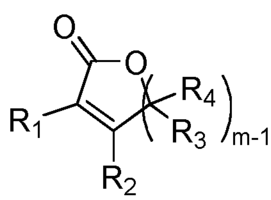
(IV)

wobei R1, R2, R3 und R4 unabhängig voneinander für Wasserstoff, einen linearen oder verzweigen gegebenenfalls Heteroatome enthaltenden C1 bis C22 Alkylrest, einen linearen oder verzweigen, ein- oder mehrfach ungesättigten, gegebenenfalls Heteroatome enthaltenden C1 bis C22 Alkenylrest oder einen gegebenenfalls einfach oder mehrfach substituierten, gegebenenfalls Heteroatome enthaltenden C6 bis C18 Arylrest stehen oder Glieder eines gesättigten oder ungesättigten 4 bis 7 gliedrigen gegebenenfalls Heteroatome und/oder Ethergruppen enthaltenen Rings oder polycyclischen Systems sein können,
wobei die Verbindungen der Formel (II) auch durch Chlor, Brom, Nitrogruppen oder Alkoxygruppen substituiert sein können,
m eine ganze Zahl größer gleich 1, bevorzugt 1, 2, 3 oder 4 ist,
und R3 und R4 in Wiederholungseinheiten (m > 1) jeweils unterschiedlich sein können.

Bevorzugte Verbindungen der Formeln (II), (III) oder (IV) sind
4-gliedrige Ringlactone wie β-Propiolacton, β-Butyrolacton, β-Isovalerolacton, β-Caprolacton, β-Isocaprolacton, β-Methyl-β-valerolacton,
5-gliedrige Ringlactone, wie γ-Butyrolacton, γ-Valerolacton, 5-Methylfuran-2(3H)-on, 5-Methylidenedihydrofuran-2(3H)-on, 5-Hydroxyfuran-2(5H)-on, 2-Benzofuran-1(3H)-on und 6-Methy-2-benzofuran-1(3H)-on,
6-gliedrige Ringlactone, wie δ-Valerolacton, 1,4-Dioxan-2-on, Dihydrocumarin, 1H-Isochromen-1-on, 8H-pyrano[3,4-b]pyridine-8-on, 1,4-Dihydro-3H-isochromen-3-on, 7,8-Dihydro-5H-pyrano[4,3-b]pyridine-5-on, 4-Methyl-3,4-dihydro-1H-pyrano[3,4-b]pyridine-1-on, 6-Hydroxy-3,4-dihydro-1H-isochromen-1-on, 7-Hydroxy-3,4-dihydro-2H-chromen-2-on, 3-Ethyl-1H-isochromen-1-on, 3-(Hydroxymethyl)-1H-isochromen-1-on, 9-Hydroxy-1H,3H-benzo[de]isochromen-1-on, 6,7-Dimethoxy-1,4-dihydro-3H-isochromen-3-on und 3-Phenyl-3,4-dihydro-1H-isochromen-1-on,
7-gliedrige Ringlactone, wie ε-Caprolacton, 1,5-Dioxepan-2-on, 5-Methyloxepan-2-on, Oxepane-2,7-dion, thiepan-2-on, 5-Chlorooxepan-2-on, (4*S*)-4-(Propan-2-yl)oxepan-2-on, 7-Butyloxepan-2-on, 5-(4-Aminobuthyl)oxepan-2-on, 5-Phenyloxepan-2-on, 7-Hexyloxepan-2-on, (5*S*,7*S*)-5-Methyl-7-(propan-2-yl)oxepan-2-on, 4-Methyl-7-(propan-2-yl)oxepan-2-on, höhergliedrige Ringlactone, wie (7*E*)-Oxacycloheptadec-7-en-2-on.

Besonders bevorzugt ist ε-Caprolacton und Dihydrocumarin.

**Lactide** im Sinne der Erfindung sind cyclische Verbindungen enthaltend zwei oder mehr Esterbindungen im Ring, vorzugsweise Verbindungen der Formel (V),

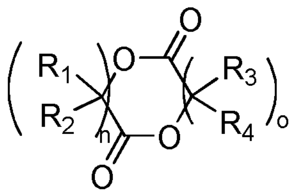

(V)

wobei R1, R2, R3 und R4 die oben genannte Bedeutung haben, und n und o unabhängig voneinander eine ganze Zahl größer gleich 1, bevorzugt 1, 2, 3 oder 4 ist, und R1 und R2 in Wiederholungseinheiten (n>1) und R3 und R4 in Wiederholungseinheiten (o > 1) jeweils unterschiedlich sein können.

Bevorzugte Verbindungen der Formeln (V) sind Glycolid (1,4-Dioxan-2,5-dion), L-Lactid (L-3,6-Dimethyl-1,4-dioxan-2,5-dion), D-Lactid, DL-Lactid, Mesolactid und 3-Methyl-1,4-dioxan-2,5-dion, 3-Hexyl-6-methyl-1,4-dioxane-2,5-dione, 3,6-Di(but-3-en-1-yl)-1,4-dioxane-2,5-dion (jeweils einschließlich optisch aktiver Formen). Besonders bevorzugt ist L-Lactid.

Als cyclische Carbonate mit mindestens drei gegebenenfalls substituierten Methylengruppen zwischen den Sauerstoffatomen der Carbonatgruppe werden vorzugsweise Verbindungen der Formel (VI) eingesetzt,

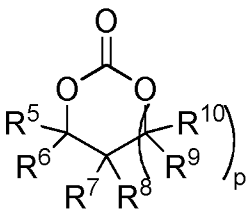

(VI)

wobei

R5, R6, R7, R8, R9 und R10 unabhängig voneinander für Wasserstoff, einen linearen oder verzweigen, gegebenenfalls Heteroatome enthaltenden C1 bis C22 Alkylrest, einen linearen oder verzweigen, ein- oder mehrfach ungesättigten, gegebenenfalls Heteroatome enthaltenden C1 bis C22 Alkenylrest oder einen gegebenenfalls Heteroatome enthaltenden, gegebenenfalls ein oder mehrfach substituierten C6 bis C18 Arylrest stehen oder Glieder eines gesättigten oder ungesättigten, gegebenenfalls Heteroatome enthaltenden 4 bis 7 gliedrigen Rings oder polycyclischen Systems sein können,
p eine ganze Zahl größer gleich 1, bevorzugt 1, 2 oder 3 ist,
und R9 und R10 in Wiederholungseinheiten (p > 1) jeweils unterschiedlich sein können,

und wobei die Verbindungen der Formel (VI) auch durch Chlor, Brom, Nitrogruppen oder Alkoxygruppen substituiert sein können.

Bevorzugte Verbindungen der Formel (VI) sind Trimethylencarbonat, Neopentylglykolcarbonat (5,5-Dimethyl-1,3-dioxan-2-on), 2,2,4-Trimethyl-1,3-pentandiolcarbonat, 2,2-Dimethyl-1,3-butandiolcarbonat, 1,3-Butandiolcarbonat, 2-Methyl-1,3-propandiolcarbonat, 2,4-Pentandiolcarbonat, 2-Methyl-butan-1,3-diolcarbonat, TMP-Monoallylethercarbonat, Pentaerythritdiallylethercarbonat, 5-(2-Hydroxyethyl)-1,3-dioxan-2-on, 5-[2-(Benzyloxy)ethyl]-1,3-dioxan-2-on, 4-Ethyl-1,3-dioxolan-2-on, 1,3-Dioxolan-2-on, 5-Ethyl-5-methyl-1,3-dioxan-2-on, 5,5-Diethyl-1,3-dioxan-2-on, 5-Methyl-5-propyl-1,3-dioxan-2-on, 5-(Phenylamino)-1,3-dioxan-2-on und 5,5-Dipropyl-1,3-dioxan-2-on. Besonders bevorzugt sind Trimethylencarbonat und Neopentylglykolcarbonat.

Cyclische Carbonate mit weniger als drei gegebenenfalls substituierten Methylengruppen zwischen den Sauerstoffatomen der Carbonatgruppe werden unter den Bedingungen des erfindungsgemäßen Verfahrens zur Copolymerisation von Epoxiden und $CO_2$ nicht oder nur zu einem geringen Anteil in die Polymerkette eingebaut.

Cyclische Carbonate mit weniger als drei gegebenenfalls substituierten Methylengruppen zwischen den Sauerstoffatomen der Carbonatgruppe können jedoch gemeinsam mit Suspensionsmitteln bestehend aus aliphatischen Lactonen, aromatischen Lactonen, Lactiden, cyclischen Carbonaten mit mindestens drei gegebenenfalls substituierten Methylengruppen zwischen den Sauerstoffatomen der Carbonatgruppe, aliphatischen cyclischen Anhydriden und aromatischen cyclischen Anhydriden eingesetzt werden. Bevorzugte cyclische Carbonate mit weniger als drei gegebenenfalls substituierten Methylengruppen zwischen den Sauerstoffatomen der Carbonatgruppe sind Ethylencarbonat, Propylencarbonat, 2,3-Butandiolcarbonat, 2,3-Pentandiolcarbonat, 2-Methyl-1,2-propandiolcarbonat, 2,3-Dimethyl-2,3-butandiolcarbonat.

Als **cyclische Anhydride** werden vorzugsweise Verbindungen der Formel (VII), (VIII) oder (IX) eingesetzt,

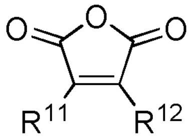

(VII)

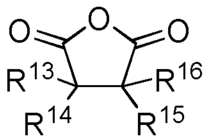

(VIII)

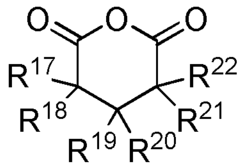

(IX)

wobei

> R11 und R12 für Wasserstoff, Halogen, lineare oder verzweigte, gegebenenfalls Heteroatome enthaltende C1-C22-Alkyl, lineare oder verzweigte, gegebenenfalls Heteroatome enthaltende, ein oder mehrfach ungesättigte C1-C22-Alkenyl oder gegebenenfalls Heteroatome enthaltende, gegebenenfalls ein- oder mehrfach substituierte C6-C18-Aryl-Substituenten stehen oder R11 und R12 Glieder eines gesättigten oder ungesättigten, gegebenenfalls Heteroatome enthaltenden 4 bis 7 gliedrigen Rings oder polycyclischen Systems sein können, vorzugsweise R11 und R12 gemeinsam einen Benzolring ergeben,
> R13, R14, R15 und R16 für Wasserstoff, lineare oder verzweigte, gegebenenfalls Heteroatome enthaltende C1-C22-Alkyl-, lineare oder verzweigte, gegebenenfalls Heteroatome enthaltende, ein oder mehrfach ungesättigte C1-C22-Alkenyl- oder gegebenenfalls Heteroatome enthaltende, gegebenenfalls ein- oder mehrfach substituierte C6-C18-Aryl-Substituenten stehen oder Glieder eines gesättigten oder ungesättigten, gegebenenfalls Heteroatome enthaltenden 4 bis 7 gliedrigen Rings oder polycyclischen Systems sein können und
> R17, R18, R19, R20, R21 und R22 für Wasserstoff, lineare oder verzweigte, gegebenenfalls Heteroatome enthaltende C1-C22-Alkyl-, lineare oder verzweigte, gegebenenfalls Heteroatome enthaltende, ein oder mehrfach ungesättigte C1-C22-Alkenyl- oder gegebenenfalls Heteroatome enthaltende, gegebenenfalls ein- oder mehrfach substituierte C6-C18-Aryl-Substituenten stehen oder Glieder eines gesättigten oder ungesättigten, gegebenenfalls Heteroatome enthaltenden 4 bis 7 gliedrigen Rings oder polycyclischen Systems sein können,

und wobei die Verbindungen der Formel (VII) und (VIII) und (IX) auch durch Chlor, Brom, Nitrogruppen oder Alkoxygruppen substituiert sein können.

Bevorzugte Verbindungen der Formel (VII), (VIII) oder (IX) sind Succinsäureanhydrid, Maleinsäureanhydrid, Phthalsäureanhydrid, 1,2-Cyclohexandicarbonsäureanhydrid, Diphensäureanhydrid, Tetrahydrophthalsäureanhydrid, Methyltetrahydrophthalsäureanhydrid, Norbornendisäureanhydrid und ihre Chlorierungsprodukte, Bernsteinsäureanhydrid, Glutarsäureanhydrid, Diglykolsäureanhydrid, 1,8-Naphthalsäureanhydrid, Bernsteinsäureanhydrid, Dodecenylbernsteinsäureanhydrid, Tetradecenylbernsteinsäureanhydrid, Hexadecenylbernsteinsäureanhydrid, Octadecenylbernsteinsäureanhydrid, 3- und 4-Nitrophthalsäureanhydrid, Tetrachlorphthalsäureanhydrid, Tetrabromphthalsäureanhydrid, Itaconsäureanhydrid, Dimethylmaleinsäureanhydrid, Allylnorbornendisäureanhydrid, 3-Methylfuran-2,5-dion, 3-Methyldihydrofuran-2,5-dion, Dihydro-2H-pyran-2,6(3H)-dion, 1,4-Dioxane-2,6-dion, 2H-Pyran-2,4,6(3H,SH)-trion, 3-Ethyldihydrofuran-2,5-dion, 3-Methoxydihydrofuran-2,5-dion, 3-(Prop-2-en-1-yl)dihydrofuran-2,5-dion, N-(2,5-Dioxotetrahydrofuran-3-yl)formamid und 3[(2E)-But-2-en-1-yl]dihydrofuran-2,5-dion. Besonders bevorzugt sind Succinsäureanhydrid, Maleinsäureanhydrid und Phthalsäureanhydrid.

Höchst bevorzugt als Suspensionsmittel werden ε-Caprolacton, Dihydrocumarin, Trimethylencarbonat, Neopentylglykolcarbonat, 3,6-Dimethyl-1,4-dioxane-2,5-dion, Succinsäureanhydrid, Maleinsäureanhydrid und Phthalsäureanhydrid sowie Mischungen zweier oder mehrerer dieser Suspensionsmittel eingesetzt.

Wie bereits erwähnt kann auch ein Gemisch aus einem oder mehreren der zuvor genannten erfindungsgemäßen Suspensionsmittel, die keine H-funktionellen Gruppen enthalten, zur Aktivierung des DMC-Katalysators eingesetzt werden. Bevorzugt wird ein Gemisch aus einem Suspensionsmittel ausgewählt aus einer ersten Gruppe bestehend aus aliphatischem Lacton, aromatischem Lacton, Lactid, oder cyclischem Carbonat mit mindestens drei gegebenenfalls substituierten Methylengruppen zwischen den Sauerstoffatomen der Carbonatgruppe mit einem Suspensionsmittel ausgewählt aus einer zweiten Gruppe bestehend aus aliphatisches cyclisches Anhydrid oder aromatisches cyclisches Anhydrid eingesetzt. Besonders bevorzugt wird ein Gemisch aus einem Suspensionsmittel ausgewählt aus einer ersten Gruppe bestehend aus ε-Caprolacton, Dihydrocumarin, Trimethylencarbonat und Neopentylglykolcarbonat mit einem Suspensionsmittel ausgewählt aus einer zweiten Gruppe bestehend aus Succinsäureanhydrid, Maleinsäureanhydrid und Phthalsäureanhydrid eingesetzt.

Zu Schritt (α):

Vorzugsweise wird in Schritt (α) mindestens eines der erfindungsgemäßen Suspensionsmittel, das keine H-funktionellen Gruppen enthält, im Reaktor gegebenenfalls gemeinsam mit DMC-Katalysator vorgelegt, und dabei wird keine H-funktionelle Startersubstanz im Reaktor vorgelegt. Alternativ können auch in Schritt (α) mindestens eines der erfindungsgemäßen Suspensionsmittel, das keine H-funktionellen Gruppen enthält, und zusätzlich eine Teilmenge der H-funktionellen Startersubstanz(en) sowie gegebenenfalls DMC-Katalysator im Reaktor vorgelegt werden.

Der DMC-Katalysator wird vorzugsweise in einer Menge eingesetzt, so dass der Gehalt an DMC-Katalysator im resultierenden Reaktionsprodukt 10 bis 10000 ppm, besonders bevorzugt 20 bis 5000 ppm und höchst bevorzugt 50 bis 500 ppm beträgt

In einer bevorzugten Ausführungsform wird in das resultierende Gemisch aus Suspensionsmittel und DMC-Katalysator bei einer Temperatur von 90 bis 150°C, besonders bevorzugt von 100 bis 140°C Inertgas (beispielsweise Argon oder Stickstoff), ein Inertgas-Kohlendioxid-Gemisch oder Kohlendioxid eingeleitet und gleichzeitig ein reduzierter Druck (absolut) von 10 mbar bis 800 mbar, besonders bevorzugt von 50 mbar bis 200 mbar angelegt.

In einer alternativen bevorzugten Ausführungsform wird das resultierende Gemisch aus Suspensionsmittel und DMC-Katalysator bei einer Temperatur von 90 bis 150°C, besonders bevorzugt von 100 bis 140°C mindestens einmal, vorzugsweise dreimal mit 1,5 bar bis 10 bar (absolut), besonders bevorzugt 3 bar bis 6 bar (absolut) eines Inertgases (beispielsweise Argon oder Stickstoff), eines Inertgas-Kohlendioxid-Gemisches oder Kohlendioxid beaufschlagt und jeweils anschließend der Überdruck auf ca. 1 bar (absolut) reduziert.

Der DMC-Katalysator kann in fester Form oder als Suspension in einem Suspensionsmittel bzw. in einer Mischung aus mindestens zwei Suspensionsmitteln zugegeben werden.

In einer weiteren bevorzugten Ausführungsform wird in Schritt (α)

(α-I) das Suspensionsmittel oder ein Gemisch aus mindestens zwei Suspensionsmitteln vorgelegt und

(α-II) die Temperatur des Suspensionsmittels oder des Gemisches aus mindestens zwei Suspensionsmittel auf 50 bis 200°C, bevorzugt 80 bis 160°C, besonders bevorzugt 100 bis 140°C gebracht und/oder der Druck im Reaktor auf weniger als 500 mbar, bevorzugt 5 mbar bis 100 mbar erniedrigt, wobei gegebenenfalls ein Inertgas-Strom (beispielsweise von Argon oder Stickstoff), ein Inertgas-Kohlendioxid-Strom oder ein Kohlendioxid-Strom durch den Reaktor geleitet wird,

wobei der Doppelmetallcyanid-Katalysator zum Suspensionsmittel oder zum Gemisch aus mindestens zwei Suspensionsmitteln in Schritt (α-I) oder unmittelbar anschließend in Schritt (α-II) zugesetzt werden, und
wobei das Suspensionsmittel keine H-funktionellen Gruppen enthält.

Zu Schritt (β):

Schritt (β) dient der Aktivierung des DMC-Katalysators. Dieser Schritt kann gegebenenfalls unter Inertgasatmosphäre, unter einer Atmosphäre aus Inertgas-Kohlendioxid-Gemisch oder unter einer Kohlendioxid-Atmosphäre durchgeführt werden. Als Aktivierung im Sinne dieser Erfindung wird ein Schritt bezeichnet, bei dem eine Teilmenge Alkylenoxidverbindung bei Temperaturen von 90 bis 150°C zur DMC-Katalysator-Suspension zugegeben wird und dann die Zugabe der Alkylenoxidverbindung unterbrochen wird, wobei aufgrund einer folgenden exothermen chemischen Reaktion eine Wärmeentwicklung, die zu einer Temperaturspitze ("Hotspot") führen kann, sowie aufgrund der Umsetzung von Alkylenoxid und gegebenenfalls $CO_2$ ein Druckabfall im Reaktor beobachtet wird. Der Verfahrensschritt der Aktivierung ist die Zeitspanne von der Zugabe der Teilmenge an Alkylenoxidverbindung, gegebenenfalls in Gegenwart von $CO_2$, zum DMC-Katalysator bis zum Auftreten der Wärmeentwicklung. Gegebenenfalls kann die Teilmenge Alkylenoxidverbindung in mehreren Einzelschritten, gegebenenfalls in Gegenwart von $CO_2$, zum DMC-Katalysator gegeben werden und dann jeweils die Zugabe der Alkylenoxidverbindung unterbrochen werden. Im diesem Fall umfasst der

Verfahrensschritt der Aktivierung die Zeitspanne von der Zugabe der ersten Teilmenge an Alkylenoxidverbindung, gegebenenfalls in Gegenwart von $CO_2$, zum DMC-Katalysator bis zum Auftreten der Wärmeentwicklung nach Zugabe der letzten Teilmenge an Alkylenoxidverbindung. Im Allgemeinen kann dem Aktivierungsschritt ein Schritt zum Trocknen des DMC-Katalysators und ggf. der H-funktionellen Starterverbindung bei erhöhter Temperatur und/oder reduziertem Druck, gegebenenfalls unter Durchleiten eines Inertgases durch die Reaktionsmischung, vorgelagert sein.

Die Dosierung eines oder mehrerer Alkylenoxide (und gegebenenfalls des Kohlendioxids) kann prinzipiell in unterschiedlicher Weise erfolgen. Der Start der Dosierung kann aus dem Vakuum heraus oder bei einem zuvor gewählten Vordruck erfolgen. Der Vordruck wird bevorzugt durch Einleiten eines Inertgases (wie beispielsweise Stickstoff oder Argon) oder von Kohlendioxid eingestellt, wobei der Druck(absolut) 5 mbar bis 100 bar, vorzugsweise 10 mbar bis 50 bar und bevorzugt 20 mbar bis 50 bar beträgt.

In einer bevorzugten Ausführungsform beträgt die bei der Aktivierung in Schritt (β) eingesetzte Menge von einem oder mehreren Alkylenoxiden 0,1 bis 25,0 Gew.-%, bevorzugt 1,0 bis 20,0 Gew.-%, besonders bevorzugt 2,0 bis 16,0 Gew.-% (bezogen auf die im Schritt (α) eingesetzte Menge an Suspensionsmittel). Das Alkylenoxid kann in einem Schritt oder portionsweise in mehreren Teilmengen zugegeben werden. Bevorzugt wird nach Zugabe einer Teilmenge Alkylenoxidverbindung die Zugabe der Alkylenoxidverbindung bis zum Auftreten der Wärmeentwicklung unterbrochen und erst dann die nächste Teilmenge an Alkylenoxidverbindung zugegeben. Bevorzugt ist auch eine zweistufige Aktivierung (Schritt β), wobei

(β1) in einer ersten Aktivierungsstufe die Zugabe einer ersten Teilmenge von Alkylenoxid unter Inertgasatmosphäre erfolgt und
(β2) in einer zweiten Aktivierungsstufe die Zugabe einer zweiten Teilmenge von Alkylenoxid unter Kohlendioxid-Atmosphäre erfolgt.

Zu Schritt (γ):

Die Dosierung einer oder mehrerer H-funktioneller Startersubstanz(en), eines oder mehrerer Alkylenoxid(e) und gegebenenfalls auch des Kohlendioxids kann simultan oder sequentiell (portionsweise) erfolgen, beispielsweise kann die gesamte Kohlendioxidmenge, die Menge an H-funktionellen Startersubstanzen und/oder die in Schritt (γ) dosierte Menge an Alkylenoxiden auf einmal oder kontinuierlich zugegeben werden. Der hier verwendete Begriff "kontinuierlich" kann als Modus der Zugabe eines Reaktanden so definiert werden, dass eine für die Copolymerisation wirksame Konzentration des Reaktanden aufrechterhalten wird, d.h. beispielsweise kann die Dosierung mit einer konstanten Dosierrate, mit einer variierenden Dosierrate oder portionsweise erfolgen.

Es ist möglich, während der Zugabe des Alkylenoxids und/oder der H-funktionellen Startersubstanzen den $CO_2$-Druck allmählich oder schrittweise zu steigern oder zu senken oder gleich zu lassen. Vorzugsweise wird der Gesamtdruck während der Reaktion durch eine Nachdosierung an Kohlendioxid konstant gehalten. Die Dosierung eines oder mehrerer Alkylenoxid(e) und/oder der einen oder mehreren H-funktionellen Startersubstanz(en) erfolgt simultan oder sequentiell zur Kohlendioxid-Dosierung. Es ist möglich, das Alkylenoxid mit konstanter Dosierrate zu dosieren oder die Dosierrate allmählich oder schrittweise zu steigern oder zu senken oder das Alkylenoxid portionsweise zuzugeben. Bevorzugt wird das Alkylenoxid mit konstanter Dosierrate dem Reaktionsgemisch zugegeben. Werden mehrere Alkylenoxide zur Synthese der Polyethercarbonatpolyole eingesetzt, so können die Alkylenoxide einzeln oder als Gemisch dosiert werden. Die Dosierung der Alkylenoxide bzw. der H-funktionellen Startersubstanzen kann simultan oder sequentiell über jeweils separate Dosierungen (Zugaben) erfolgen oder über eine oder mehrere Dosierungen, wobei die Alkylenoxide bzw. die H-funktionellen Startersubstanzen einzeln oder als Gemisch dosiert werden können. Über die Art und/oder Reihenfolge der Dosierung der H-funktionellen Startersubstanzen, der Alkylenoxide und/oder des Kohlendioxids ist es möglich, statistische, alternierende, blockartige oder gradientenartige Polyethercarbonatpolyole zu synthetisieren.

In einer bevorzugten Ausführungsform wird in Schritt (γ) die Dosierung der einen oder mehreren H-funktionellen Startersubstanz(en) zeitlich vor der Zugabe des Alkylenoxids beendet.

Vorzugsweise wird ein Überschuss an Kohlendioxid bezogen auf die berechnete Menge an eingebautem Kohlendioxid im Polyethercarbonatpolyol eingesetzt, da bedingt durch die Reaktionsträgheit von Kohlendioxid ein Überschuss von Kohlendioxid von Vorteil ist. Die Menge an Kohlendioxid kann über den Gesamtdruck bei den jeweiligen Reaktionsbedingungen festgelegt werden. Als Gesamtdruck (absolut) hat sich der Bereich von 0,01 bis 120 bar, bevorzugt 0,1 bis 110 bar, besonders bevorzugt von 1 bis 100 bar für die Copolymerisation zur Herstellung der Polyethercarbonatpolyole als vorteilhaft erwiesen. Es ist möglich, das Kohlendioxid kontinuierlich oder diskontinuierlich zuzuführen. Dies hängt davon ab, wie schnell die Alkylenoxide verbraucht werden und ob das Produkt gegebenenfalls $CO_2$-freie Polyether-Blöcke enthalten soll. Die Menge des Kohlendioxids (angegeben als Druck) kann bei der Zugabe der Alkylenoxide ebenso variieren. $CO_2$ kann auch als Feststoff in den Reaktor gegeben werden und dann unter den gewählten Reaktionsbedingungen in den gasförmigen, gelösten, flüssigen und/oder überkritischen Zustand übergehen.

Eine bevorzugte Ausführungsform des erfindungsgemäßen Verfahrens ist unter anderem dadurch gekennzeichnet, dass in Schritt (γ) die Gesamtmenge der einen oder mehreren H-funktionellen Startersubstanz(en) zugegeben wird. Diese Zugabe kann mit einer konstanten Dosierrate, mit einer variierenden Dosierrate oder portionsweise erfolgen.

Für das erfindungsgemäße Verfahren hat sich weiterhin gezeigt, dass die Copolymerisation (Schritt (γ)) zur Herstellung der Polyethercarbonatpolyole vorteilhafterweise bei 50 bis 150°C, bevorzugt bei 60 bis 145°C, besonders bevorzugt bei 70 bis 140°C und ganz besonders bevorzugt bei 90 bis 130°C durchgeführt wird. Werden Temperaturen unterhalb von 50°C eingestellt, wird die Reaktion im allgemeinen sehr langsam. Bei Temperaturen oberhalb von 150°C steigt die Menge an unerwünschten Nebenprodukten stark an.

Die Dosierung des Alkylenoxids, der H-funktionellen Starterverbindung und des DMC-Katalysators kann über separate oder gemeinsame Dosierstellen erfolgen. In einer bevorzugten Ausführungsform werden das Alkylenoxid und die H-funktionelle Starterverbindung über separate Dosierstellen kontinuierlich dem Reaktionsgemisch zugeführt. Diese Zugabe der einen oder mehreren H-funktionellen Startersubstanz(en) kann als kontinuierliche Zudosierung in den Reaktor oder portionsweise erfolgen.

Die Schritte (α), (β) und (γ) können in demselben Reaktor oder jeweils separat in unterschiedlichen Reaktoren durchgeführt werden. Besonders bevorzugte Reaktortypen sind: Rohrreaktoren, Rührkessel, Schlaufenreaktoren.

Polyethercarbonatpolyole können in einem Rührkessel hergestellt werden, wobei der Rührkessel je nach Ausführungsform und Betriebsweise über den Reaktormantel, innen liegende und/oder in einem Umpumpkreislauf befindliche Kühlflächen gekühlt wird. Sowohl in der semi-batch Anwendung, bei der das Produkt erst nach Ende der Reaktion entnommen wird, als auch in der kontinuierlichen Anwendung, bei der das Produkt kontinuierlich entnommen wird, ist besonders auf die Dosiergeschwindigkeit des Alkylenoxids zu achten. Sie ist so einzustellen, dass trotz der inhibierenden Wirkung des Kohlendioxids die Alkylenoxide genügend schnell abreagieren. Die Konzentration an freien Alkylenoxiden in der Reaktionsmischung während des Aktivierungsschritts (Schritt β) beträgt vorzugsweise > 0 bis 100 Gew.-%, besonders bevorzugt > 0 bis 50 Gew-%, höchst bevorzugt > 0 bis 20 Gew.-% (jeweils bezogen auf das Gewicht der Reaktionsmischung). Die Konzentration an freien Alkylenoxiden in der Reaktionsmischung während der Reaktion (Schritt γ) beträgt vorzugsweise > 0 bis 40 Gew.-%, besonders bevorzugt > 0 bis 25 Gew.-%, höchst bevorzugt > 0 bis 15 Gew.-% (jeweils bezogen auf das Gewicht der Reaktionsmischung).

In einer bevorzugten Ausführungsform wird die gemäß den Schritten (α) und (β) resultierende aktivierte DMC-Katalysator-Suspensionsmittel-Mischung in demselben Reaktor weiter mit einem oder mehreren Alkylenoxid(en), einer oder mehreren Startersubstanz(en) und Kohlendioxid umgesetzt. In einer weiteren bevorzugten Ausführungsform wird die gemäß den Schritten (α) und (β) resultierende aktivierte DMC-Katalysator-Suspensionsmittel-Mischung in einem anderen Reaktionsbehältnis (beispielsweise einem Rührkessel, Rohrreaktor oder Schlaufenreaktor) weiter mit Alkylenoxiden, einer oder mehreren Startersubstanz(en) und Kohlendioxid umgesetzt.

Bei Reaktionsführung in einem Rohrreaktor werden die gemäß den Schritten (α) und (β) resultierende aktivierte Katalysator-Suspensionsmittel-Mischung, eine oder mehrere H-funktionelle Startersubstanz(en), ein oder mehrere Alkylenoxid(e) und Kohlendioxid kontinuierlich durch ein Rohr gepumpt. Die molaren Verhältnisse der Reaktionspartner variieren je nach gewünschtem Polymer. In einer bevorzugten Ausführungsform wird hierbei Kohlendioxid in seiner flüssigen oder überkritischen Form zudosiert, um eine optimale Mischbarkeit der Komponenten zu ermöglichen. Vorteilhafterweise werden Mischelemente zur besseren Durchmischung der Reaktionspartner eingebaut, wie sie zum Beispiel von der Firma Ehrfeld Mikrotechnik BTS GmbH vertrieben werden, oder Mischer-Wärmetauscherelemente, die gleichzeitig die Durchmischung und Wärmeabfuhr verbessern.

Schlaufenreaktoren können ebenfalls zur Herstellung von Polyethercarbonatpolyolen verwendet werden. Hierunter fallen im Allgemeinen Reaktoren mit Stoffrückführung, wie beispielsweise ein Strahlschlaufenreaktor, der auch kontinuierlich betrieben werden kann, oder ein schlaufenförmig ausgelegter Rohrreaktor mit geeigneten Vorrichtungen für die Umwälzung der Reaktionsmischung oder eine Schlaufe von mehreren hintereinander geschalteten Rohrreaktoren. Der Einsatz eines Schlaufenreaktors ist insbesondere deshalb von Vorteil, weil hier eine Rückvermischung realisiert werden kann, so dass die Konzentration an freien Alkylenoxiden in der Reaktionsmischung im optimalen Bereich, vorzugsweise im Bereich > 0 bis 40 Gew.-%, besonders bevorzugt > 0 bis 25 Gew.-%, höchst bevorzugt > 0 bis 15 Gew.-% (jeweils bezogen auf das Gewicht der Reaktionsmischung) gehalten werden kann.

Bevorzugt werden die Polyethercarbonatpolyole in einem kontinuierlichen Verfahren hergestellt, das sowohl eine kontinuierliche Copolymerisation als auch eine kontinuierliche Zugabe der einen oder mehreren H-funktionellen Startersubstanz(en) umfasst.

Gegenstand der Erfindung ist daher auch ein Verfahren wobei in Schritt (γ) eine oder mehrere H-funktionelle Startersubstanz(en), ein oder mehrere Alkylenoxid(e) sowie DMC-Katalysator in Gegenwart von Kohlendioxid ("Copolymerisation") kontinuierlich in den Reaktor dosiert werden und wobei das resultierende Reaktionsgemisch (enthaltend das Reaktionsprodukt) kontinuierlich aus dem Reaktor entfernt wird. Vorzugsweise wird dabei in Schritt (γ) der DMC-Katalysator in H-funktioneller Starterverbindung suspendiert kontinuierlich zugegeben.

Beispielsweise wird für das kontinuierliche Verfahren zur Herstellung der Polyethercarbonatpolyole gemäß den Schritten (α) und (β) eine aktivierte DMC-Katalysator-Suspensionsmittel-Mischung hergestellt, dann werden gemäß

Schritt (γ)

(γ1) jeweils eine Teilmenge an einer oder mehreren H-funktionelle Startersubstanz(en), einem oder mehreren Alkylenoxid(en) und Kohlendioxid zudosiert zum Initiieren der Copolymerisation, und

(γ2) während des Fortschreitens der Copolymerisation jeweils die verbleibende Menge an DMC-Katalysator, einer oder mehreren Startersubstanz(en) und Alkylenoxid(en) in Gegenwart von Kohlendioxid kontinuierlich zudosiert, wobei gleichzeitig resultierendes Reaktionsgemisch kontinuierlich aus dem Reaktor entfernt wird.

In Schritt (γ) wird der DMC-Katalysator bevorzugt suspendiert in der H-funktionellen Starterverbindung zugegeben, wobei die Menge vorzugsweise so gewählt ist, dass der Gehalt an DMC-Katalysator im resultierenden Reaktionsprodukt 10 bis 10000 ppm, besonders bevorzugt 20 bis 5000 ppm und höchst bevorzugt 50 bis 500 ppm beträgt.

Vorzugsweise werden die Schritte (α) und (β) in einem ersten Reaktor durchgeführt, und das resultierende Reaktionsgemisch dann in einen zweiten Reaktor für die Copolymersation gemäß Schritt (γ) überführt. Es ist aber auch möglich, die Schritte (α), (β) und (γ) in einem Reaktor durchzuführen.

Es ist auch gefunden worden, dass das Verfahren der vorliegenden Erfindung zur Herstellung großer Mengen des Polyethercarbonatpolyolprodukts verwendet werden kann, wobei anfänglich ein gemäß den Schritten (α) und (β) in einem Suspensionsmittel aktivierter DMC-Katalysator verwendet wird, und während der Copolymerisation (γ) der DMC-Katalysator ohne vorherige Aktivierung zugesetzt wird.

Ein besonders vorteilhaftes Merkmal der bevorzugten Ausführungsform der vorliegenden Erfindung ist also die Fähigkeit zur Verwendung von "frischen" DMC-Katalysatoren ohne Aktivierung für die Teilmenge an DMC-Katalysator, der kontinuierlich im Schritt (γ) zugegeben wird. Eine analog zu Schritt (β) durchzuführende Aktivierung von DMC-Katalysatoren umfasst nicht nur zusätzliche Aufmerksamkeit der Bedienungsperson, wodurch sich die Fertigungskosten erhöhen, sondern sie erfordert auch einen Druck-Reaktionsbehälter, wodurch sich auch die Kapitalkosten beim Bau einer entsprechenden Produktionsanlage erhöhen. Hier wird "frischer" Katalysator als nicht aktivierter DMC-Katalysator in fester Form oder in Form einer Aufschlämmung in einer Startersubstanz oder Suspensionsmittel definiert. Die Fähigkeit des vorliegenden Verfahrens zur Verwendung von frischem, nicht aktiviertem DMC-Katalysator im Schritt (γ) ermöglicht signifikante Einsparungen bei der kommerziellen Herstellung von Polyethercarbonatpolyolen und ist eine bevorzugte Ausführungsform der vorliegenden Erfindung.

Der hier verwendete Begriff "kontinuierlich" kann als Modus der Zugabe eines relevanten Katalysators oder Reaktanden so definiert werden, dass eine im Wesentlichen kontinuierliche wirksame Konzentration des DMC-Katalysators oder des Reaktanden aufrechterhalten wird. Die Katalysatorzufuhr kann echt kontinuierlich oder in relativ eng beabstandeten Inkrementen erfolgen. Gleichermaßen kann eine kontinuierliche Starterzugabe echt kontinuierlich sein oder in Inkrementen erfolgen. Es würde nicht vom vorliegenden Verfahren abweichen, einen DMC-Katalysator oder Reaktanden inkrementell so zuzugeben, dass die Konzentration der zugegebenen Stoffe für einige Zeit vor der nächsten inkrementellen Zugabe im Wesentlichen auf null abfällt. Es ist jedoch bevorzugt, dass die DMC-Katalysatorkonzentration während des Hauptteils des Verlaufs der kontinuierlichen Reaktion im Wesentlichen auf derselben Konzentration gehalten wird und dass Startersubstanz während des Hauptteils des Copolymerisations-Verfahrens vorhanden ist. Eine inkrementelle Zugabe von DMC-Katalysator und/oder Reaktand, die die Beschaffenheit des Produkts nicht wesentlich beeinflusst, ist in demjenigen Sinn, in dem der Begriff hier verwendet wird, dennoch "kontinuierlich". Es ist beispielsweise machbar, eine Rückführungsschleife bereitzustellen, in der ein Teil der reagierenden Mischung zu einem vorherigen Punkt im Verfahren zurückgeführt wird, wodurch durch inkrementelle Zugaben bewirkte Diskontinuitäten geglättet werden.

Schritt (δ)

Optional kann in einem Schritt (δ) das in Schritt (γ) kontinuierlich entfernte Reaktionsgemisch, welches im allgemeinen einen Gehalt von 0,05 Gew.-% bis 10 Gew.-% Alkylenoxid enthält, in einen Nachreaktor überführt werden, in dem im Wege einer Nachreaktion der Gehalt an freiem Alkylenoxid auf weniger als 0,05 Gew.-% im Reaktionsgemisch reduziert wird. Als Nachreaktor kann beispielsweise ein Rohrreaktor, ein Schlaufenreaktor oder ein Rührkessel dienen.

Bevorzugt liegt der Druck in diesem Nachreaktor bei demselben Druck wie in dem Reaktionsapparat, in dem der Reaktionsschritt (γ) durchgeführt wird. Der Druck in dem nachgeschalteten Reaktor kann jedoch auch höher oder niedriger gewählt werden. In einer weiteren bevorzugten Ausführungsform wird das Kohlendioxid nach dem Reaktionsschritt (γ) ganz oder teilweise abgelassen und der nachgeschaltete Reaktor bei Normaldruck oder einem geringen Überdruck betrieben. Die Temperatur in dem nachgeschalteten Reaktor liegt bevorzugt bei 50 bis 150°C und besonders bevorzugt bei 80 bis 140°C.

Die erfindungsgemäß erhaltenen Polyethercarbonatpolyole haben beispielsweise eine Funktionalität von mindestens 1, bevorzugt von 1 bis 8, besonders bevorzugt von 1 bis 6 und ganz besonders bevorzugt von 2 bis 4. Das Molekulargewicht beträgt bevorzugt 400 bis 10000 g/mol und besonders bevorzugt 500 bis 6000 g/mol.

Allgemein können für das erfindungsgemäße Verfahren **Alkylenoxide** (Epoxide) mit 2-24 Kohlenstoffatomen eingesetzt werden. Bei den Alkylenoxiden mit 2-24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, ein- oder mehrfach epoxidierte Fette als Mono-, Di- und Triglyceride, epoxidierte Fettsäuren, $C_1$-$C_{24}$-Ester von epoxidierten Fettsäuren, Epichlorhydrin, Glycidol, und Derivate des Glycidols wie beispielsweise Methylglycidylether, Ethylglycidylether, 2-Ethylhexylglycidylether, Allylglycidylether, Glycidylmethacrylat sowie epoxidfunktionelle Alkyoxysilane wie beispielsweise 3-Glycidyloxypropyltrimethoxysilan, 3-Glycidyloxypropyltriethoxysilan, 3-Glycidyloxypropyltripropoxysilan, 3-Glycidyloxypropyl-methyl-dimethoxysilan, 3-Glycidyloxy-propyl-ethyldiethoxysilan, 3-Glycidyloxypropyltriisopropoxysilan. Vorzugsweise werden als Alkylenoxide Ethylenoxid und/oder Propylenoxid, insbesondere Propylenoxid eingesetzt.

Als geeignete **H-funktionelle Startersubstanz** ("Starter") können Verbindungen mit für die Alkoxylierung aktiven H-Atomen eingesetzt werden, die eine Molmasse von 18 bis 4500 g/mol, bevorzugt von 62 bis 500 g/mol und besonders bevorzugt von 62 bis 182 g/mol aufweisen. Die Fähigkeit zur Verwendung eines Starters mit einer niedrigen Molmasse ist ein deutlicher Vorteil gegenüber der Verwendung von oligomeren Startern, die mittels einer vorherigen Oxyalkylierung hergestellt sind. Insbesondere wird eine Wirtschaftlichkeit erreicht, die durch das Weglassen eines getrennten Oxyalkylierungsverfahrens ermöglicht wird.

Für die Alkoxylierung aktive Gruppen mit aktiven H-Atomen sind beispielsweise -OH, $-NH_2$ (primäre Amine), -NH- (sekundäre Amine), -SH und $-CO_2H$, bevorzugt sind -OH und $-NH_2$, besonders bevorzugt ist -OH. Als H-funktionelle Startersubstanz wird beispielsweise eine oder mehrere Verbindungen ausgewählt aus der Gruppe bestehend aus ein- oder mehrwertigen Alkoholen, mehrwertigen Aminen, mehrwertigen Thiolen, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine, Polytetrahydrofurane (z. B. PolyTHF® der BASF), Polytetrahydrofuranamine, Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und $C_1$-$C_{24}$ Alkyl-Fettsäureester, die im Mittel mindestens 2 OH-Gruppen pro Molekül enthalten, eingesetzt. Beispielhaft handelt es sich bei den $C_1$-$C_{24}$ Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Startersubstanzen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-tert-Butoxy-2-propanol, 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, tert-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Startersubstanzen geeignete mehrwertige Alkohole sind beispielsweise zweiwertige Alkohole (wie beispielsweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentandiol, Methylpentandiole (wie beispielweise 3-Methyl-1,5-pentandiol), 1,6-Hexandiol, 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielsweise Trimethylolpropan, Glycerin, Trishydroxyethylisocyanurat, Rizinusöl); vierwertige Alkohole (wie beispielsweise Pentaerythrit); Polyalkohole (wie beispielsweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvorgenannten Alkohole mit unterschiedlichen Mengen an $\varepsilon$-Caprolacton.

Die H-funktionellen Startersubstanzen können auch aus der Substanzklasse der Polyetherpolyole ausgewählt sein, die ein Molekulargewicht $M_n$ im Bereich von 18 bis 4500 g/mol und eine Funktionalität von 2 bis 3 aufweisen. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende

oder Blockcopolymere aus Ethylenoxid und Propylenoxid handeln.

Die H-funktionellen Startersubstanzen können auch aus der Substanzklasse der Polyesterpolyole ausgewählt sein. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydriden eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole, die ebenfalls als Startersubstanzen zur Herstellung der Polyethercarbonatpolyole dienen können.

Des Weiteren können als H-funktionelle Startersubstanzen Polycarbonatdiole eingesetzt werden, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z. B. in der EP-A 1359177.

In einer weiteren Ausführungsform der Erfindung können Polyethercarbonatpolyole als H-funktionelle Startersubstanzen eingesetzt werden. Insbesondere werden Polyethercarbonatpolyole, die nach dem hier beschriebenen erfindungsgemäßen Verfahren erhältlich sind, eingesetzt. Diese als H-funktionelle Startersubstanzen eingesetzten Polyethercarbonatpolyole werden hierzu in einem separaten Reaktionsschritt zuvor hergestellt.

Die H-funktionellen Startersubstanzen weisen im Allgemeinen eine Funktionalität (d.h. Anzahl an für die Polymerisation aktiven H-Atomen pro Molekül) von 1 bis 8, bevorzugt von 2 oder 3 auf. Die H-funktionellen Startersubstanzen werden entweder einzeln oder als Gemisch aus mindestens zwei H-funktionellen Startersubstanzen eingesetzt.

Besonders bevorzugt handelt es sich bei den H-funktionellen Startersubstanzen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit, Sorbitol und Polyetherpolyole mit einem Molekulargewicht Mn im Bereich von 150 bis 4500 g/mol und einer Funktionalität von 2 bis 3.

Die Herstellung der Polyethercarbonatpolyole erfolgt durch katalytische Anlagerung von Kohlendioxid und Alkylenoxiden an H-funktionelle Startersubstanzen. Unter "H-funktionell" wird im Sinne der Erfindung die Anzahl an für die Alkoxylierung aktiven H-Atomen pro Molekül der Startersubstanz verstanden.

DMC-Katalysatoren zur Verwendung in der Homopolymerisation von Alkylenoxiden sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität und ermöglichen die Herstellung von Polyethercarbonatpolyolen bei sehr geringen Katalysatorkonzentrationen, so dass eine Abtrennung des Katalysators aus dem fertigen Produkt i.a. nicht mehr erforderlich ist. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert.-Butanol) noch einen Polyether mit einem zahlenmittlerem Molekulargewicht größer als 500 g/mol enthalten.

Die erfindungsgemäßen DMC-Katalysatoren werden vorzugsweise erhalten, indem man

(i) im ersten Schritt eine wässrige Lösung eines Metallsalzes mit der wässrigen Lösung eines Metallcyanidsalzes in Gegenwart eines oder mehrerer organischen Komplexliganden, z.B. eines Ethers oder Alkohols, umsetzt,
(ii) wobei im zweiten Schritt der Feststoff aus der aus (i) erhaltenen Suspension durch bekannte Techniken (wie Zentrifugation oder Filtration) abgetrennt wird,
(iii) wobei gegebenenfalls in einem dritten Schritt der isolierte Feststoff mit einer wässrigen Lösung eines organischen Komplexliganden gewaschen wird (z.B. durch Resuspendieren und anschließende erneute Isolierung durch Filtration oder Zentrifugation),
(iv) wobei anschließend der erhaltene Feststoff, gegebenenfalls nach Pulverisierung, bei Temperaturen von im allgemeinen 20 - 120°C und bei Drücken von im Allgemeinen 0,1 mbar bis Normaldruck (1013 mbar) getrocknet wird,

und wobei im ersten Schritt oder unmittelbar nach der Ausfällung der Doppelmetallcyanidverbindung (zweiter Schritt) ein oder mehrere organische Komplexliganden, vorzugsweise im Überschuss (bezogen auf die Doppelmetallcyanidverbindung) und gegebenenfalls weitere komplexbildende Komponenten zugesetzt werden.

Die in den erfindungsgemäßen DMC-Katalysatoren enthaltenen Doppelmetallcyanid-Verbindungen sind die Reaktionsprodukte wasserlöslicher Metallsalze und wasserlöslicher Metallcyanidsalze.

Beispielsweise werden eine wässrige Lösung von Zinkchlorid (bevorzugt im Überschuss bezogen auf das Metallcyanidsalz wie beispielsweise Kaliumhexacyanocobaltat) und Kaliumhexacyanocobaltat gemischt und anschließend Dimethoxyethan (Glyme) oder *tert*-Butanol (vorzugsweise im Überschuss, bezogen auf Zinkhexacyanocobaltat) zur gebildeten Suspension gegeben.

Zur Herstellung der Doppelmetallcyanid-Verbindungen geeignete Metallsalze besitzen bevorzugt die allgemeine Formel (X),

$$M(X)_n \qquad (X)$$

wobei

M ausgewählt ist aus den Metallkationen $Zn^{2+}$, $Fe^{2+}$, $Ni^{2+}$, $Mn^{2+}$, $Co^{2+}$, $Sr^{2+}$, $Sn^{2+}$, $Pb^{2+}$ und, $Cu^{2+}$, bevorzugt ist M $Zn^{2+}$, $Fe^{2+}$, $Co^{2+}$ oder $Ni^{2+}$,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
n ist 1, wenn X = Sulfat, Carbonat oder Oxalat ist und
n ist 2, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (XI),

$$M_r(X)_3 \qquad (XI)$$

wobei

M ausgewählt ist aus den Metallkationen $Fe^{3+}$, $Al^{3+}$, $Co^{3+}$ und $Cr^{3+}$,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
r ist 2, wenn X = Sulfat, Carbonat oder Oxalat ist und
r ist 1, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (XII),

$$M(X)_s \qquad (XII)$$

wobei

M ausgewählt ist aus den Metallkationen $Mo^{4+}$, $V^{4+}$ und $W^{4+}$
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
s ist 2, wenn X = Sulfat, Carbonat oder Oxalat ist und
s ist 4, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (XIII),

$$M(X)_t \qquad (XIII)$$

wobei

M ausgewählt ist aus den Metallkationen $Mo^{6+}$ und $W^{6+}$
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
t ist 3, wenn X = Sulfat, Carbonat oder Oxalat ist und
t ist 6, wenn X = Halogenid, Hydroxid, Carboxylat, Cyanat, Thiocyanat, Isocyanat, Isothiocyanat oder Nitrat ist,

Beispiele geeigneter Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Eisen(III)chlorid, Cobalt(II)chlorid, Cobalt(II)thiocyanat, Nickel(II)chlorid und Nickel(II)nitrat. Es können auch Mischungen verschiedener Metallsalze eingesetzt werden.

Zur Herstellung der Doppelmetallcyanid-Verbindungen geeignete Metallcyanidsalze besitzen bevorzugt die allgemeine Formel (XIV)

$$(Y)_a\, M'(CN)_b\, (A)_c \qquad (XIV)$$

wobei

M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),

Y ausgewählt ist aus einem oder mehreren Metallkationen der Gruppe bestehend aus Alkalimetall (d.h. $Li^+$, $Na^+$, $K^+$, $Rb^+$) und Erdalkalimetall (d.h. $Be^{2+}$, $Mg^{2+}$, $Ca^{2+}$, $Sr^{2+}$, $Ba^{2+}$),

A ausgewählt ist aus einem oder mehreren Anionen der Gruppe bestehend aus Halogenide (d.h. Fluorid, Chlorid, Bromid, Iodid), Hydroxid, Sulfat, Carbonat, Cyanat, Thiocyanat, Isocyanat, Isothiocyanat, Carboxylat, Azid, Oxalat oder Nitrat und

a, b und c sind ganzzahlige Zahlen, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Natriumhexacyanocobaltat(III), Kaliumhexacyanocobaltat(III), Kaliumhexacyanoferrat(II), Kaliumhexacyanoferrat(III), Calciumhexacyanocobaltat(III) und Lithiumhexacyanocobaltat(III).

Bevorzugte Doppelmetallcyanid-Verbindungen, die in den erfindungsgemäßen DMC-Katalysatoren enthalten sind, sind Verbindungen der allgemeinen Formel (XV)

$$M_x[M'_{x'},(CN)_y]_z \qquad (XV)$$

worin M wie in Formel (X) bis (XIII) und

M' wie in Formel (XIV) definiert ist, und

x, x', y und z sind ganzzahlig und so gewählt, dass die Elektronenneutralität der Doppelmetallcyanidverbindung gegeben ist.

Vorzugsweise ist

x = 3, x' = 1, y = 6 und z = 2,

M = Zn(II), Fe(II), Co(II) oder Ni(II) und

M' = Co(III), Fe(III), Cr(III) oder Ir(III).

Beispiele geeigneter Doppelmetallcyanidverbindungen a) sind Zinkhexacyanocobaltat(III), Zinkhexacyanoiridat(III), Zinkhexacyanoferrat(III) und Cobalt(II)hexacyanocobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt verwendet wird Zinkhexacyanocobaltat(III).

Die bei der Herstellung der DMC-Katalysatoren zugesetzten organischen Komplexliganden sind beispielsweise in US 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert.-butylether, Diethylenglykol-mono-tert.-butylether, Tripropylenglykol-mono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, tert-Butanol 2-Methyl-3-buten-2-ol, 2-Methyl-3-butin-2-ol, Ethylenglykol-mono-tert.-butylether und 3-Methyl-3-oxetan-methanol.

Optional werden bei der Herstellung der erfindungsgemäßen DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkylmethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, $\alpha$, $\beta$-ungesättigten Carbonsäureester oder ionische oberflächen- bzw. grenzflächenaktiven Verbindungen eingesetzt.

Bevorzugt werden bei der Herstellung der erfindungsgemäßen DMC-Katalysatoren im ersten Schritt die wässrigen Lösungen des Metallsalzes (z.B. Zinkchlorid), eingesetzt im stöchiometrischen Überschuss (mindestens 50 Mol-%) bezogen auf Metallcyanidsalz (also mindestens ein molares Verhältnis von Metallsalz zu Metallcyanidsalz von 2,25 zu 1,00) und des Metallcyanidsalzes (z.B. Kaliumhexacyanocobaltat) in Gegenwart des organischen Komplexliganden (z.B. tert.-Butanol) umgesetzt, wobei sich eine Suspension bildet, die die Doppelmetallcyanid-Verbindung (z.B. Zinkhexacyanocobaltat), Wasser, überschüssiges Metallsalz, und den organischen Komplexliganden enthält.

Der organische Komplexligand kann dabei in der wässrigen Lösung des Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des Metallsalzes und des Metallcyanidsalzes, und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators wie in WO-A 01/39883 beschrieben.

Im zweiten Schritt erfolgt die Isolierung des Feststoffs (d.h. die Vorstufe des erfindungsgemäßen Katalysators) aus der Suspension durch bekannte Techniken, wie Zentrifugation oder Filtration.

In einer bevorzugten Ausführungsvariante wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem erfindungsgemäßen Katalysator entfernt werden. Bevorzugt liegt die Menge des organischen Komplexliganden in der wässrigen Waschlösung zwischen 40 und 80 Gew.-%, bezogen auf die Gesamtlösung.

Optional wird im dritten Schritt der wässrigen Waschlösung weitere komplexbildende Komponente, bevorzugt im Bereich zwischen 0,5 und 5 Gew.-%, bezogen auf die Gesamtlösung, zugefügt.

Außerdem ist es vorteilhaft, den isolierten Feststoff mehr als einmal zu waschen. Vorzugsweise wird in einem ersten Waschschritt (iii-1) mit einer wässrigen Lösung des ungesättigten Alkohols gewaschen (z.B. durch Resuspendieren und anschließende erneute Isolierung durch Filtration oder Zentrifugation), um auf diese Weise zum Beispiel wasserlösliche Nebenprodukte, wie Kaliumchlorid, aus dem erfindungsgemäßen Katalysator zu entfernen. Besonders bevorzugt liegt die Menge des ungesättigten Alkohols in der wässrigen Waschlösung zwischen 40 und 80 Gew.-%, bezogen auf die Gesamtlösung des ersten Waschschritts. In den weiteren Waschschritten (iii-2) wird entweder der erste Waschschritt einmal oder mehrmals, vorzugsweise einmal bis dreimal wiederholt, oder vorzugsweise wird eine nichtwässrige Lösung, wie z.B. eine Mischung oder Lösung aus ungesättigtem Alkohol und weiterer komplexbildender Komponente (bevorzugt im Bereich zwischen 0,5 und 5 Gew.-%, bezogen auf die Gesamtmenge der Waschlösung des Schrittes (iii-2)), als Waschlösung eingesetzt und der Feststoff damit einmal oder mehrmals, vorzugsweise einmal bis dreimal gewaschen.

Der isolierte und gegebenenfalls gewaschene Feststoff wird anschließend, gegebenenfalls nach Pulverisierung, bei Temperaturen von im allgemeinen 20 - 100°C und bei Drücken von im Allgemeinen 0,1 mbar bis Normaldruck (1013 mbar) getrocknet.

Ein bevorzugtes Verfahren zur Isolierung der erfindungsgemäßen DMC-Katalysatoren aus der Suspension durch Filtration, Filterkuchenwäsche und Trocknung wird in WO-A 01/80994 beschrieben.

Die nach dem erfindungsgemäßen Verfahren erhältlichen Polyethercarbonatpolyole weisen einen geringen Gehalt an Nebenprodukten auf und können problemlos verarbeitet werden, insbesondere durch Umsetzung mit Di- und/oder Polyisocyanaten zu Polyurethanen, insbesondere Polyurethan-Weichschaumstoffen. Für Polyurethananwendungen werden vorzugsweise Polyethercarbonatpolyole eingesetzt, die auf einer H-funktionellen Startersubstanz basieren, welche eine Funktionalität von mindestens 2 besitzt. Des Weiteren können die nach dem erfindungsgemäßen Verfahren erhältlichen Polyethercarbonatpolyole in Anwendungen wie Wasch- und Reinigungsmittelformulierungen, Bohrflüssigkeiten, Kraftstoffadditiven, ionischen und nichtionischen Tensiden, Schmiermitteln, Prozesschemikalien für die Papier- oder Textilherstellung oder kosmetischen Formulierungen verwendet werden. Dem Fachmann ist bekannt,

dass abhängig vom jeweiligen Anwendungsgebiet die zu verwendenden Polyethercarbonatpolyole gewisse Stoffeigenschaften wie beispielsweise Molekulargewicht, Viskosität, Funktionalität und/oder Hydroxylzahl erfüllen müssen.

Beispiele

Die Erfindung wird anhand der nachfolgenden Beispiele näher erläutert, ohne jedoch darauf beschränkt zu sein.
Eingesetzte H-funktionelle Starterverbindung ("Starter"): Dipropylenglykol
Der DMC-Katalysator wurde hergestellt nach Beispiel 6 von WO-A 01/80994.

Für die Durchführung der Polymerisationsreaktionen in einem semi-batch CAOS Verfahren wurde ein 300 ml Druckreaktor der Fa. Parr eingesetzt. Der Druckreaktor hatte eine Höhe (innen) von 10,16 cm und einen Innendurchmesser von 6,35 cm. Der Reaktor war ausgestattet mit einem elektrischen Heizmantel (510 Watt maximale Heizleistung). Die Gegenkühlung bestand in einem U-förmig gebogenen Tauchrohr mit 6 mm Außendurchmesser, das bis 5 mm über den Boden in den Reaktor ragte und das mit Kühlwasser von ca. 10°C durchströmt wurde. Der Wasserstrom wurde über ein Magnetventil ein- und ausgeschaltet. Weiterhin war der Reaktor mit einem Einleitrohr sowie einem Thermofühler mit 1,6 mm Durchmesser ausgestattet, die bis 3 mm über den Boden in den Reaktor ragten.

Die Heizleistung des elektrischen Heizmantels lag während der Aktivierung [Schritt (β)] im Durchschnitt bei *ca.* 20% der maximalen Heizleistung. Durch die Regelung schwankte die Heizleistung um ±5% der maximalen Heizleistung. Das Auftreten einer erhöhten Wärmeentwicklung im Reaktor, hervorgerufen durch die rasche Umsetzung von Propylenoxid während der Aktivierung des Katalysators [Schritt (β)] wurde beobachtet über eine reduzierte Wärmeleistung des Heizmantels, Einschalten der Gegenkühlung und gegebenenfalls einen Temperaturanstieg im Reaktor. Das Auftreten einer Wärmeentwicklung im Reaktor, hervorgerufen durch die kontinuierliche Umsetzung von Propylenoxid während der Reaktion [Schritt (γ)] führte zu einem Absenken der Leistung des Heizmantels auf ca. 8% der maximalen Heizleistung. Durch die Regelung schwankte die Heizleistung um ±5% der maximalen Heizleistung.

Bei dem in den Beispielen eingesetzten Hohlwellenrührer handelte es sich um einen Hohlwellenrührer, bei dem das Gas über eine hohle Welle des Rührers in die Reaktionsmischung eingeleitet wurde. Der auf der Hohlwelle angebrachte Rührkörper wies vier Arme auf, hatte einen Durchmesser von 35 mm und eine Höhe von 14 mm. An jedem Ende des Arms waren zwei Gasauslässe angebracht, die einen Durchmesser von 3 mm aufwiesen. Durch die Drehung des Rührers entstand ein Unterdruck derart, dass das über der Reaktionsmischung befindliche Gas ($CO_2$ und ggf. Alkylenoxid) abgesaugt wurde und über die Hohlwelle des Rührers in die Reaktionsmischung eingeleitet wurde.

Bei der Copolymerisation von Propylenoxid und $CO_2$ resultierte neben dem cyclischen Propylencarbonat das Polyetherestercarbonatpolyol, welches einerseits in Formel (XVIa) gezeigte Polycarbonat-Einheiten,

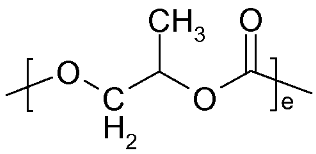 bzw. 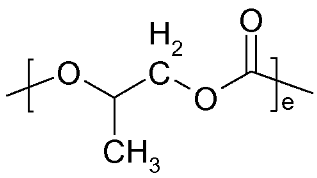

(XVIa)

und andererseits in Formel (XVIb ) gezeigte Polyether-Einheiten

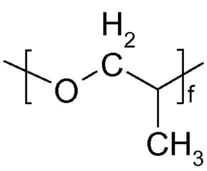 bzw. 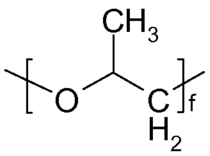

(XVIb)

sowie gegebenenfalls Estergruppen aus dem Einbau des Suspensionsmittels enthält.

Die Charakterisierung des Reaktionsgemisches erfolgte durch $^1$H-NMR Spektroskopie. Das Verhältnis der Menge an cyclischem Propylencarbonat zu Polyethercarbonatpolyol bzw. Polyetherestercarbonatpolyol (Selektivität; Verhältnis g/e) sowie der Anteil der nicht umgesetzten Monomere (Propylenoxid $R_{PO}$, Trimethylencarbonat $R_{TMC}$ in mol%, Lactid 3,6-Dimethyl-1,4-dioxan-2,5-dion $R_{LA}$, ε-Caprolacton $R_{\varepsilon\text{-}CL}$ in mol%, Dihydrocumarin $R_{DHC}$ in mol%) wurden mittels $^1$H-NMR Spektroskopie bestimmt. Dazu wurde jeweils eine Probe der nach der Reaktion erhaltenen Reaktionsmischung in deuteriertem Chloroform gelöst und auf einem Spektrometer der Firma Bruker (AV400, 400 MHz) vermessen.

Anschließend wurde die Reaktionsmischung mit Dichlormethan (20 ml) verdünnt und die Lösung durch einen

Fallfilmverdampfer geleitet. Die Lösung (0,1 kg in 3 h) lief entlang der inneren Wand eines von außen auf 120°C beheizten Rohres mit 70 mm Durchmesser und 200 mm Länge herab, wobei die Reaktionsmischung durch drei mit einer Geschwindigkeit von 250 U/min rotierende Rollen mit 10 mm Durchmesser jeweils gleichmäßig als dünner Film auf der inneren Wand des Fallfilmverdampfers verteilt wurde. Im Inneren des Rohres wurde über eine Pumpe ein Druck von 3 mbar eingestellt. Die von leicht flüchtigen Bestandteilen (nicht umgesetzte Epoxide, cyclisches Carbonat, Suspensionsmittel, Lösungsmittel) gereinigte Reaktionsmischung wurde am unteren Ende des beheizten Rohres in einer Vorlage aufgefangen.

Die Charakterisierung des Polyethercarbonatpolyols bzw. Polyetherestercarbonatpolyols erfolgte durch $^1$H-NMR Spektroskopie, Gelpermeations-Chromatographie sowie Bestimmung der OH-Zahl. Das molare Verhältnis von Carbonatgruppen zu Ethergruppen im Polyethercarbonatpolyol bzw. Polyetherestercarbonatpolyol (Verhältnis e/f) sowie der molare Anteil der in das Polymer eingebauten Comonomere wurden mittels $^1$H-NMR Spektroskopie bestimmt. Eine Probe der gereinigten Reaktionsmischung wurde dazu jeweils in deuteriertem Chloroform gelöst und auf einem Spektrometer der Firma Bruker (AV400, 400 MHz) vermessen.

Die relevanten Resonanzen im $^1$H-NMR Spektrum (bezogen auf TMS = 0 ppm), die zur Integration verwendet wurden, sind wie folgt:

I1: 1,10 - 1,17: Methylgruppe der Polyether-Einheiten, Fläche der Resonanz entspricht drei H Atomen
12: 1,25 - 1,34: Methylgruppe der Polycarbonat-Einheiten, Fläche der Resonanz entspricht drei H Atomen
13: 1,45 - 1,48: Methylgruppe des cyclischen Carbonats, Fläche der Resonanz entspricht drei H Atomen
14: 2,95 - 3,00: CH Gruppe für freies, nicht abreagiertes Propylenoxid, Fläche der Resonanz entspricht einem H Atom
15: 1,82-2,18: $CH_2$ Gruppe von in das Polymer eingebautem Trimethylcarbonat, Fläche der Resonanz entspricht zwei H Atom
16: 1,82-1,89: Methylgruppe des in das Polymer eingebauten Lactids 3,6-Dimethyl-1,4-dioxan-2,5-dion, Fläche der Resonanz entspricht sechs H Atomen
17: 1,82-1,89: $CH_2$ Gruppe des in das Polymer eingebauten ε-Caprolactons, Fläche der Resonanz entspricht zwei H Atomen
18: 2,55-2,65: $CH_2$ Gruppe des in das Polymer eingebauten Dihydrocumarins, Fläche der Resonanz entspricht zwei H Atomen
19: 2,12-2,18: $CH_2$ Gruppe für freies, nicht abreagiertes Trimethylcarbonat, Fläche der Resonanz entspricht zwei H Atomen
I10: 2,27-2,34: $CH_2$ Gruppe für freies, nicht abreagiertes ε-Caprolacton, Fläche der Resonanz entspricht zwei H Atomen
I11: 2,77-2,82: $CH_2$ Gruppe für freies, nicht abreagiertes Dihydrocumarin, Fläche der Resonanz entspricht zwei H Atomen

Angegeben sind das molare Verhältnis der Menge an cyclischem Propylencarbonat zu Carbonat-Einheiten im Polyethercarbonatpolyol bzw. Polyetherestercarbonatpolyol (Selektivität g/e) und das molare Verhältnis von Carbonatgruppen zu Ethergruppen im Polyethercarbonatpolyol bzw. Polyetherestercarbonatpolyol (e/f).

Unter Berücksichtigung der relativen Intensitäten wurden die Werte wie folgt berechnet:

Molares Verhältnis der Menge an cyclischem Propylencarbonat zu Carbonat-Einheiten im Polyethercarbonatpolyol bzw. Polyetherestercarbonatpolyol (Selektivität g/e):

$$g/e = I3 / I2 \qquad \text{(XVII)}$$

Molares Verhältnis von Carbonatgruppen zu Ethergruppen im Polyethercarbonatpolyol bzw. Polyetherestercarbonatpolyol (e/f):

$$e/f = I2 / I1 \qquad \text{(XVIII)}$$

Anteil an Carbonateinheiten in den Wiederholungseinheiten des Polyethercarbonatpolyols bzw. Polyetherestercarbonatpolyols:

$$A_{Carbonat} = [(I2/3) / ((I1/3)+(I2/3)+(I5/2)))] \times 100\% \qquad \text{(XIX)}$$

Anteil des geöffneten Trimethylencarbonats in den Wiederholungseinheiten des Polyethercarbonatpolyols:

$$A_{TMC} = [(I5/2) / ((I1/3)+(I2/3)+(I5/2)))] \times 100\% \qquad (XX)$$

Anteil des geöffneten Lactids 3,6-Dimethyl-1,4-dioxane-2,5-dion in den Wiederholungseinheiten des Polyetherestercarbonatpolyols:

$$A_{LA} = [(I6/6) / ((I1/3)+(I2/3)+(I6/6)))] \times 100\% \qquad (XXI)$$

Anteil des geöffneten ε-Caprolactons in den Wiederholungseinheiten des Polyetherestercarbonatpolyols:

$$A_{\varepsilon\text{-}CL} = [(I7/2) / ((I1/3)+(I2/3)+(I7/2)))] \times 100\% \qquad (XXII)$$

Anteil des geöffneten Dihydrocumarins in den Wiederholungseinheiten des Polyethercarbonatpolyols:

$$A_{DHC} = [(I8/2) / ((I1/3)+(I2/3)+(I8/2)))] \times 100\% \qquad (XXIII)$$

Der molare Anteil des nicht umgesetzten Propylenoxids ($R_{PO}$ in mol%) bezogen auf die Summe der bei der Aktivierung und der Copolymerisation eingesetzten Menge an Propylenoxid, berechnet sich nach der Formel:

$$R_{PO} = [(I4) / ((I1/3)+(I2/3-I4)+(I3/3)+I4))] \times 100\% \qquad (XXIV)$$

Der molare Anteil des nicht umgesetzten Trimethylcarbonats ($R_{TMC}$ in mol%) bezogen auf die Summe der bei der Aktivierung und der Copolymerisation eingesetzten Menge an Trimethylcarbonat, berechnet sich nach der Formel:

$$R_{TMC} = [(I9) / ((I1/3)+(I2/3-I4)+(I3/3)+(I5)+(I9))] \times 100\% \qquad (XXV)$$

Der molare Anteil des nicht umgesetzten ε-Caprolactons ($R_{\varepsilon\text{-}CL}$ in mol%) bezogen auf die Summe der bei der Aktivierung und der Copolymerisation eingesetzten Menge an ε-Caprolacton, berechnet sich nach der Formel:

$$R_{\varepsilon\text{-}CL} = [(I10) / ((I1/3)+(I2/3-I4)+(I3/3)+(I7)+(I10))] \times 100\% \qquad (XXVI)$$

Der molare Anteil des nicht umgesetzten Dihydrocumarins ($R_{DHC}$ in mol%) bezogen auf die Summe der bei der Aktivierung und der Copolymerisation eingesetzten Menge an Dihydrocumarin, berechnet sich nach der Formel:

$$R_{DHC} = [(I11) / ((I1/3)+(I2/3-I4)+(I3/3)+(I8)+(I11))] \times 100\% \qquad (XXVII)$$

Das Zahlenmittel $M_n$ und das Gewichtsmittel $M_w$ des Molekulargewichts der entstandenen Polyethercarbonatpolyole bzw. Polyetherestercarbonatpolyole wurde mittels GelpermeationsChromatographie (GPC) bestimmt. Es wurde vorgegangen nach DIN 55672-1: "Gelpermeationschromatographie, Teil 1 - Tetrahydrofuran als Elutionsmittel" (SECurity GPC-System von PSS Polymer Service, Flussrate 1.0 ml/min; Säulen: 2×PSS SDV linear M, 8×300 mm, 5 µm; RID-Detektor). Dabei wurden Polystyrolproben bekannter Molmasse zur Kalibrierung verwendet. Die Polydispersität wurde als das Verhältnis $M_w/M_n$ berechnet.

Die OH-Zahl (Hydroxylzahl) wurde in Anlehnung an DIN 53240-2 bestimmt, wobei jedoch *N*-Methylpyrrolidon anstelle von THF/Dichlormethan als Lösemittel verwendet wurde. Es wurde mit 0,5 molarer ethanolischer KOH Lösung titriert (Endpunktserkennung mittels Potentiometrie). Als Prüfsubstanz diente Rizinusöl mit durch Zertifikat festgelegter OH-Zahl. Die Angabe der Einheit in "$mg_{KOH}$/g" bezieht sich auf mg[KOH]/g[Polyethercarbonatpolyol bzw. Polyetherestercarbonatpolyol].

Beispiel 1a Aktivierung von DMC Katalysator in Gegenwart von Trimethylencarbonat und Durchführung der Copolymerisation im semi-batch CAOS Verfahren bei 105°C

Schritt $\alpha$:

In einem 300 ml Druckreaktor ausgestattet mit einem Gaseintragsrührer wurde eine Mischung aus DMC-Katalysator (16 mg) und Trimethylencarbonat (20 g) vorgelegt und der Druckreaktor wurde auf 105°C erhitzt.

Schritt $\beta$:

Es wurden in den Druckreaktor 2,0 g Propylenoxid mit Hilfe einer HPLC-Pumpe (1 mL/min) zudosiert und die Reaktionsmischung für 20 min gerührt (800 rpm). Anschließend wurden noch zwei weitere mal 2,0 g Propylenoxid mit Hilfe der HPLC-Pumpe (1 ml/min) zudosiert und die Reaktionsmischung für 20 min gerührt (800 rpm).

Schritt $\gamma$:

Der Druckreaktor wurde mit 15 bar $CO_2$ beaufschlagt, wodurch die Temperatur im Druckreaktor leicht absank. Die Temperatur wurde auf 105°C nachgeregelt und während der nachfolgenden Schritte der Druck im Druckreaktor durch Nachdosieren von $CO_2$ bei 15 bar gehalten. Es wurden unter Rühren weitere 50 g Propylenoxid über eine HPLC-Pumpe (0,08 mL/min) zudosiert, wobei die Reaktionsmischung weiterhin gerührt wurde (800 U/min). Fünfzehn Minuten nach Beginn der Zugabe von Propylenoxid wurden unter Rühren 4,0 g Dipropylenglykol über eine separate HPLC-Pumpe (0,06 mL/min) zudosiert. Nach Ende der Zugabe von Propylenoxid wurde die Reaktionsmischung noch weitere 2 h bei 105°C gerührt. Durch Abkühlen des Druckreaktors im Eisbad wurde die Reaktion beendet, der Überdruck abgelassen und das resultierende Produkt analysiert.

Das resultierende Gemisch war frei von Propylenoxid und Trimethylencarbonat.
Die Selektivität g/e betrug 0,07.
Die Selektivität e/f war 0,14. Dies entspricht einem Anteil von Carbonateinheiten in 10,8 mol-% der Wiederholungseinheiten des Polyethercarbonatpolyols ($A_{Carbonat}$).
Das geöffnete Trimethylencarbonat war in 12,1 mol-% der Wiederholungseinheiten des Polyethercarbonatpolyols ($A_{TMC}$) enthalten.
Die Molmasse $M_n$ betrug 2953 g/mol bei einer Polydispersität von 1,5.
Die OH-Zahl betrug 51,0 $mg_{KOH}$/g.

Beispiel 1b Aktivierung von DMC Katalysator in Gegenwart von Trimethylencarbonat und cyclischem Propylencarbonat und Durchführung der Copolymerisation im semi-batch CAOS Verfahren bei 105°C

Schritt $\alpha$:

In einem 300 ml Druckreaktor ausgestattet mit einem Gaseintragsrührer wurde eine Mischung aus DMC-Katalysator (16 mg), Trimethylencarbonat (3,0 g) und cyclischem Propylencarbonat (17,0 g) vorgelegt und der Druckreaktor wurde auf 105°C erhitzt.

Schritt $\beta$:

Es wurden 2,0 g Propylenoxid mit Hilfe einer HPLC-Pumpe (1 mL/min) zu dosiert und die Reaktionsmischung für 20 min gerührt (800 rpm). Anschließend wurden noch zwei weitere mal 2,0 g Propylenoxid mit Hilfe der HPLC-Pumpe (1 ml/min) zudosiert und die Reaktionsmischung für 20 min gerührt (800 rpm).

Schritt $\gamma$:

Der Druckreaktor wurde mit 15 bar $CO_2$ beaufschlagt, wodurch die Temperatur im Druckreaktor leicht absank. Die Temperatur wurde auf 105°C nachgeregelt und während der nachfolgenden Schritte der Druck im Druckreaktor durch Nachdosieren von $CO_2$ bei 15 bar gehalten. Es wurden unter Rühren weitere 67 g Propylenoxid über eine HPLC-Pumpe (0,08 mL/min) zu dosiert, wobei die Reaktionsmischung weiterhin gerührt wurde (800 U/min). Fünfzehn Minuten nach Beginn der Zugabe von Propylenoxid wurden unter Rühren 4,0 g Dipropylenglykol über eine separate HPLC-Pumpe (0,08 mL/min) zu dosiert. Nach Ende der Zugabe von Propylenoxid wurde die Reaktionsmischung noch weitere 2 h bei 105°C gerührt. Durch Abkühlen des Druckreaktors im Eisbad wurde die Reaktion beendet, der Überdruck abgelassen und das resultierende Produkt analysiert.

Das resultierende Gemisch war frei von Propylenoxid und Trimethylencarbonat.
Die Selektivität g/e betrug 0,03.
Die Selektivität e/f war 0,21. Dies entspricht einem Anteil von Carbonateinheiten in 11,4 mol-% der Wiederholungseinheiten des Polyethercarbonatpolyols ($A_{Carbonat}$).
Das geöffnete Trimethylencarbonat war in 2,2 mol-% der Wiederholungseinheiten des Polyethercarbonatpolyols ($A_{TMC}$) enthalten.
Die Molmasse $M_n$ betrug 4451 g/mol bei einer Polydispersität von 1,3.
Die OH-Zahl betrug 35,0 $mg_{KOH}$/g.

Beispiel 2 Aktivierung von DMC Katalysator in Gegenwart von 3,6-Dimethyl-1,4-dioxan-2,5-dion und Durchführung der Copolymerisation im semi-batch CAOS Verfahren bei 105°C

Schritt $\alpha$:

In einem 300 ml Druckreaktor ausgestattet mit einem Gaseintragsrührer wurde eine Mischung aus DMC-Katalysator (16 mg) und 3,6-Dimethyl-1,4-dioxan-2,5-dion (20 g) vorgelegt und der Druckreaktor auf 105°C erhitzt.

Schritt $\beta$:

Es wurden 2,0 g Propylenoxid mit Hilfe einer HPLC-Pumpe (1 mL/min) zudosiert und die Reaktionsmischung für 20 min gerührt (800 rpm). Anschließend wurden noch zwei weitere mal 2,0 g Propylenoxid mit Hilfe der HPLC-Pumpe (1 ml/min) zudosiert und die Reaktionsmischung für 20 min gerührt (800 rpm).

Schritt $\gamma$:

Der Druckreaktor wurde mit 15 bar $CO_2$ beaufschlagt, wodurch die Temperatur im Druckreaktor leicht absank. Die Temperatur wurde auf 105°C nachgeregelt und während der nachfolgenden Schritte der Druck im Druckreaktor durch Nachdosieren von $CO_2$ bei 15 bar gehalten. Es wurden unter Rühren weitere 50 g Propylenoxid über eine HPLC-Pumpe (0,08 mL/min) zudosiert, wobei die Reaktionsmischung weiterhin gerührt wurde (800 U/min). Fünfzehn Minuten nach Beginn der Zugabe von Propylenoxid wurden unter Rühren 4,0 g Dipropylenglykol über eine separate HPLC-Pumpe (0,06 mL/min) zudosiert. Nach Ende der Zugabe von Propylenoxid wurde die Reaktionsmischung noch weitere 2 h bei 105°C gerührt. Durch Abkühlen des Druckreaktors im Eisbad wurde die Reaktion beendet, der Überdruck wurde abgelassen und das resultierende Produkt analysiert.
Das resultierende Gemisch war frei von Propylenoxid und 3,6-Dimethyl-1,4-dioxan-2,5-dion.
Die Selektivität g/e betrug 0,05.
Die Selektivität e/f war 0,27. Dies entspricht einem Anteil von Carbonateinheiten in 18,6 mol-% der Wiederholungseinheiten des Polyetherestercarbonatpolyols ($A_{Carbonat}$).
Das geöffnete 3,6-Dimethyl-1,4-dioxan-2,5-dion war in 11,3 mol-% der Wiederholungseinheiten des Polyetherestercarbonatpolyols ($A_{LA}$) enthalten.
Die Molmasse $M_n$ betrug 3618 g/mol bei einer Polydispersität von 2,0.
Die OH-Zahl betrug 43,5 $mg_{KOH}$/g.

Beispiel 3 Aktivierung von DMC Katalysator in Gegenwart von $\varepsilon$-Caprolacton und Durchführung der Copolymerisation im semi-batch CAOS Verfahren bei 130°C

Schritt $\alpha$:

In einem 300 ml Druckreaktor ausgestattet mit einem Gaseintragsrührer wurde eine Mischung aus DMC-Katalysator (16 mg) und $\varepsilon$-Caprolacton (20 g) vorgelegt und der Druckreaktor auf 130°C erhitzt.

Schritt $\beta$:

Es wurden 2,0 g Propylenoxid mit Hilfe einer HPLC-Pumpe (1 mL/min) zudosiert und die Reaktionsmischung für 20 min gerührt (800 rpm). Anschließend wurden noch zwei weitere mal 2,0 g Propylenoxid mit Hilfe der HPLC-Pumpe (1 ml/min) zudosiert und die Reaktionsmischung für 20 min gerührt (800 rpm).

Schritt γ:

Es wurden 15 bar $CO_2$ aufgepresst, wodurch die Temperatur im Druckreaktor leicht absank. Die Temperatur wurde auf 130°C nachgeregelt und während der nachfolgenden Schritte der Druck im Druckreaktor durch Nachdosieren von $CO_2$ bei 15 bar gehalten. Es wurden unter Rühren weitere 50 g Propylenoxid über eine HPLC-Pumpe (0,08 mL/min) zudosiert, wobei die Reaktionsmischung weiterhin gerührt wurde (800 U/min). Fünfzehn Minuten nach Beginn der Zugabe von Propylenoxid wurden unter Rühren 4,0 g Dipropylenglykol über eine separate HPLC-Pumpe (0,06 mL/min) zudosiert. Nach Ende der Zugabe von Propylenoxid wurde die Reaktionsmischung noch weitere 2 h bei 130°C gerührt. Durch Abkühlen des Druckreaktors im Eisbad wurde die Reaktion beendet, der Überdruck wurde abgelassen und das resultierende Produkt analysiert.

Das resultierende Gemisch war frei von Propylenoxid und ε-Caprolacton.
Die Selektivität g/e betrug 0,11.
Die Selektivität e/f war 0,07. Dies entspricht einem Anteil von Carbonateinheiten in 5,4 mol-% der Wiederholungseinheiten des Polyetherestercarbonatpolyols ($A_{Carbonat}$).
Das geöffnete ε-Caprolacton war in 12,6 mol-% der Wiederholungseinheiten des Polyetherestercarbonatpolyols ($A_{\varepsilon\text{-}CL}$) enthalten.
Die Molmasse $M_n$ betrug 2940 g/mol bei einer Polydispersität von 1,3.
Die OH-Zahl betrug 46,5 $mg_{KOH}$/g.

Beispiel 4 Aktivierung von DMC Katalysator in Gegenwart von Dihydrocumarin und Durchführung der Copolymerisation im semi-batch CAOS Verfahren bei 130°C

Schritt α:

In einem 300 ml Druckreaktor ausgestattet mit einem Gaseintragsrührer wurde eine Mischung aus DMC-Katalysator (16 mg) und Dihydrocumarin (20 g) vorgelegt und der Druckreaktor auf 130°C erhitzt.

Schritt β:

Es wurden 2,0 g Propylenoxid mit Hilfe einer HPLC-Pumpe (1 mL/min) zudosiert und die Reaktionsmischung für 20 min gerührt (800 rpm). Anschließend wurden noch zwei weitere mal 2,0 g Propylenoxid mit Hilfe der HPLC-Pumpe (1 ml/min) zudosiert und die Reaktionsmischung für 20 min gerührt (800 rpm).

Schritt γ:

Es wurden 15 bar $CO_2$ aufgepresst, wodurch die Temperatur im Druckreaktor leicht absank. Die Temperatur wurde auf 130°C nachgeregelt und während der nachfolgenden Schritte der Druck im Druckreaktor durch Nachdosieren von $CO_2$ bei 15 bar gehalten. Es wurden unter Rühren weitere 50 g Propylenoxid über eine HPLC-Pumpe (0,08 mL/min) zudosiert, wobei die Reaktionsmischung weiterhin gerührt wurde (800 U/min). Fünfzehn Minuten nach Beginn der Zugabe von Propylenoxid wurden unter Rühren 4,0 g Dipropylenglykol über eine separate HPLC-Pumpe (0,06 mL/min) zudosiert. Nach Ende der Zugabe von Propylenoxid wurde die Reaktionsmischung noch weitere 2 h bei 130°C gerührt. Durch Abkühlen des Druckreaktors im Eisbad wurde die Reaktion beendet, der Überdruck wurde abgelassen und das resultierende Produkt analysiert.

Das resultierende Gemisch war frei von Propylenoxid und Dihydrocumarin.
Die Selektivität g/e betrug 0,10.
Die Selektivität e/f war 0,20. Dies entspricht einem Anteil von Carbonateinheiten in 14,9 mol-% der Wiederholungseinheiten des Polyethercarbonatpolyols ($A_{Carbonat}$).
Das geöffnete Dihydrocumarin war in 10,8 mol-% der Wiederholungseinheiten des Polyethercarbonatpolyols ($A_{DHC}$) enthalten.
Die Molmasse $M_n$ betrug 3888 g/mol bei einer Polydispersität von 1,4.
Die OH-Zahl betrug 50,8 $mg_{KOH}$/g.

## Patentansprüche

1. Verfahren zur Herstellung von Polyethercarbonatpolyolen durch Anlagerung von Alkylenoxiden und Kohlendioxid an eine oder mehrere H-funktionelle Startersubstanz(en) in Gegenwart eines Doppelmetallcyanid-Katalysators, **dadurch gekennzeichnet, dass**

(α) ein Suspensionsmittel, das keine H-funktionellen Gruppen enthält und ausgewählt ist aus einer oder mehreren Verbindung(en) aus der Gruppe bestehend aus aliphatischen Lactonen, aromatischen Lactonen, Lactiden, cyclischen Carbonaten mit mindestens drei gegebenenfalls substituierten Methylengruppen zwischen den Sauerstoffatomen der Carbonatgruppe, aliphatischen cyclischen Anhydriden und aromatischen cyclischen Anhydriden, in einem Reaktor vorgelegt wird und
(γ) eine oder mehrere H-funktionelle Startersubstanz(en) während der Reaktion kontinuierlich in den Reaktor zudosiert werden.

**2.** Verfahren gemäß Anspruch 1, wobei in Schritt (α) ein Suspensionsmittel, das keine H-funktionellen Gruppen enthält und ausgewählt ist aus einer oder mehreren Verbindung(en) aus der Gruppe bestehend aus aliphatischen Lactonen, aromatischen Lactonen, Lactiden, cyclischen Carbonaten mit mindestens drei gegebenenfalls substituierten Methylengruppen zwischen den Sauerstoffatomen der Carbonatgruppe, aliphatischen cyclischen Anhydriden und aromatischen cyclischen Anhydriden, im Reaktor vorgelegt wird, und dabei keine H-funktionelle Startersubstanz im Reaktor vorgelegt wird.

**3.** Verfahren gemäß Anspruch 1, wobei in Schritt (α) ein Suspensionsmittel, das keine H-funktionellen Gruppen enthält und ausgewählt ist aus einer oder mehreren Verbindung(en) aus der Gruppe bestehend aus aliphatischen Lactonen, aromatischen Lactonen, Lactiden, cyclischen Carbonaten mit mindestens drei gegebenenfalls substituierten Methylengruppen zwischen den Sauerstoffatomen der Carbonatgruppe, aliphatischen cyclischen Anhydriden und aromatischen cyclischen Anhydriden, und zusätzlich eine Teilmenge der H-funktionellen Startersubstanz(en) im Reaktor vorgelegt werden.

**4.** Verfahren gemäß einem der Ansprüche 1 bis 3, wobei in Schritt (α) ein Suspensionsmittel, das keine H-funktionellen Gruppen enthält und ausgewählt ist aus einer oder mehreren Verbindung(en) aus der Gruppe bestehend aus aliphatischen Lactonen, aromatischen Lactonen, Lactiden, cyclischen Carbonaten mit mindestens drei gegebenenfalls substituierten Methylengruppen zwischen den Sauerstoffatomen der Carbonatgruppe, aliphatischen cyclischen Anhydriden und aromatischen cyclischen Anhydriden, gemeinsam mit DMC-Katalysator im Reaktor vorgelegt wird.

**5.** Verfahren gemäß Anspruch 4, wobei anschließend an Schritt (α)

(β) zu dem Gemisch aus Schritt (α) eine Teilmenge an Alkylenoxid bei Temperaturen von 90 bis 150°C zugegeben wird, und wobei dann die Zugabe der Alkylenoxidverbindung unterbrochen wird.

**6.** Verfahren gemäß Anspruch 5, wobei Schritt (β) unter Inertgasatmosphäre, unter einer Atmosphäre aus Inertgas-Kohlendioxid-Gemisch oder unter einer Kohlendioxid-Atmosphäre durchgeführt wird.

**7.** Verfahren gemäß Anspruch 5, wobei in Schritt (β)

(β1) in einer ersten Aktivierungsstufe die Zugabe einer ersten Teilmenge von Alkylenoxid unter Inertgasatmosphäre erfolgt und
(β2) in einer zweiten Aktivierungsstufe die Zugabe einer zweiten Teilmenge von Alkylenoxid unter Kohlendioxid-Atmosphäre erfolgt.

**8.** Verfahren gemäß einem der Ansprüche 1 bis 7, wobei in Schritt (γ) eine oder mehrere H-funktionelle Startersubstanz(en), ein oder mehrere Alkylenoxid(e) kontinuierlich dosiert werden in Gegenwart von Kohlendioxid ("Copolymerisation").

**9.** Verfahren gemäß einem der Ansprüche 1 bis 8, wobei in Schritt (γ) die Dosierung der einen oder mehreren H-funktionellen Startersubstanz(en) zeitlich vor der Zugabe des Alkylenoxids beendet wird.

**10.** Verfahren gemäß Anspruch 8 oder 9, wobei in Schritt (γ) DMC-Katalysator kontinuierlich in den Reaktor dosiert wird und das resultierende Reaktionsgemisch kontinuierlich aus dem Reaktor entfernt wird.

**11.** Verfahren gemäß Anspruch 10, wobei der DMC-Katalysator in H-funktioneller Starterverbindung suspendiert kontinuierlich zugegeben wird.

**12.** Verfahren gemäß Anspruch 10 oder 11, wobei

(δ) das in Schritt (γ) kontinuierlich entfernte Reaktionsgemisch mit einem Gehalt von 0,05 Gew.-% bis 10 Gew.-% Alkylenoxid in einen Nachreaktor überführt wird, in dem im Wege einer Nachreaktion der Gehalt an freiem Alkylenoxid auf weniger als 0,05 Gew.-% im Reaktionsgemisch reduziert wird.

**13.** Verfahren gemäß einem der Ansprüche 1 bis 12, wobei in Schritt (α) als Suspensionsmittel mindestens eine Verbindung ausgewählt aus der Gruppe bestehend aus
einer Verbindung der Formeln (II), (III), (IV) oder (V),

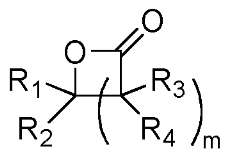
(II)

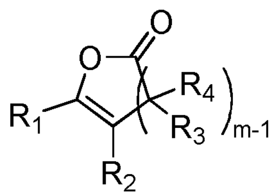
(III)

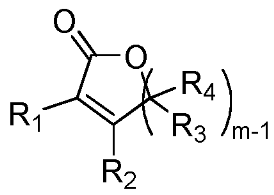
(IV)

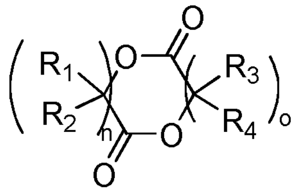
(V)

wobei

R1, R2, R3 und R4 unabhängig voneinander für Wasserstoff, einen linearen oder verzweigen C1 bis C22 Alkylrest, einen linearen oder verzweigen C1 bis C22 Alkenylrest oder einen C6 bis C18 Arylrest stehen oder Glieder eines 4 bis 7 gliedrigen gegebenenfalls Ethergruppen enthaltenen Rings oder polycyclischen Systems sein können,
wobei die Verbindungen der Formel (II) auch durch Chlor, Brom, Nitrogruppen oder Alkoxygruppen substituiert sein können,
m eine ganze Zahl größer gleich 1 ist,
und R3 und R4 in Wiederholungseinheiten (m > 1) jeweils unterschiedlich sein können,
und n und o unabhängig voneinander eine ganze Zahl größer gleich 1, bevorzugt 1, 2, 3 oder 4 ist,
und R1 und R2 in Wiederholungseinheiten (n>1) und R3 und R4 in Wiederholungseinheiten (o > 1) jeweils unterschiedlich sein können.

oder einer Verbindung der Formel (VI),

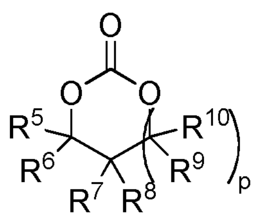
(VI)

wobei

R5, R6, R7, R8, R9 und R10 unabhängig voneinander für Wasserstoff, einen linearen oder verzweigen C1 bis C22 Alkylrest, einen linearen oder verzweigen C1 bis C22 Alkenylrest oder einen C6 bis C18 Arylrest stehen oder Glieder eines 4 bis 7 gliedrigen Rings oder polycyclischen Systems sein können,

p eine ganze Zahl größer gleich 1, bevorzugt 1, 2 oder 3 ist,
und R9 und R10 in Wiederholungseinheiten (p > 1) jeweils unterschiedlich sein können, und wobei die Verbindungen der Formel (VI) auch durch Chlor, Brom, Nitrogruppen oder Alkoxygruppen substituiert sein können,

oder eine Verbindung der Formel (VII), (VIII) oder (IX),

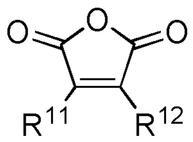

(VII)

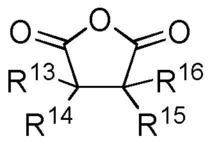

(VIII)

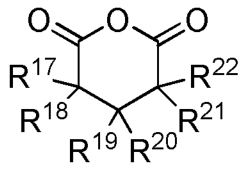

(IX)

wobei

R11 und R12 für Wasserstoff, Halogen, C1-C22-Alkyl, C1-C22-Alkenyl oder C6-C18-Aryl stehen oder R11 und R12 Glieder eines 4 bis 7 gliedrigen Rings oder polycyclischen Systems sein können, vorzugsweise R11 und R12 gemeinsam einen Benzolring ergeben, R13, R14, R15 und R16 für Wasserstoff, C1-C22-Alkyl, C1-C22-Alkenyl oder C6-C18-Aryl stehen oder Glieder eines 4 bis 7 gliedrigen Rings oder polycyclischen Systems sein können und
R17, R18, R19, R20, R21 und R22 für Wasserstoff, C1-C22-Alkyl, C1-C22-Alkenyl oder C6-C18-Aryl stehen oder Glieder eines 4 bis 7 gliedrigen Rings oder polycyclischen Systems sein können,

und wobei die Verbindungen der Formel (VII) und (VIII) und (IX) auch durch Chlor, Brom, Nitrogruppen oder Alkoxygruppen substituiert sein können
eingesetzt wird.

**14.** Verfahren gemäß einem der Ansprüche 1 bis 12, wobei in Schritt (α) als Suspensionsmittel ε-Caprolacton, Dihydrocumarin, Trimethylencarbonat, Neopentylglykolcarbonat, 3,6-Dimethyl-1,4-dioxane-2,5-dion, Succinsäureanhydrid, Maleinsäureanhydrid und Phthalsäureanhydrid sowie Mischungen zweier oder mehrerer dieser Suspensionsmittel eingesetzt wird.

**15.** Verfahren gemäß einem der Ansprüche 1 bis 14, wobei die H-funktionelle Startersubstanz ausgewählt ist aus mindestens einer der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit, Sorbitol und Polyetherpolyole mit einem Molekulargewicht Mn im Bereich von 150 bis 4500 g/mol und einer Funktionalität von 2 bis 3.

## Claims

**1.** Process for the preparation of polyether carbonate polyols by addition of alkylene oxides and carbon dioxide to one or more H-functional starter substance(s) in the presence of a double metal cyanide catalyst, **characterised in that**

(α) a suspending agent that does not contain H-functional groups and is selected from one or more compound(s) from the group consisting of aliphatic lactones, aromatic lactones, lactides, cyclic carbonates having at least three optionally substituted methylene groups between the oxygen atoms of the carbonate group, aliphatic cyclic anhydrides and aromatic cyclic anhydrides is initially placed in a reactor, and
(γ) one or more H-functional starter substance(s) are metered into the reactor continuously during the reaction.

**2.** Process according to Claim 1, wherein in step (α) a suspending agent that does not contain H-functional groups and is selected from one or more compound(s) from the group consisting of aliphatic lactones, aromatic lactones, lactides, cyclic carbonates having at least three optionally substituted methylene groups between the oxygen atoms of the carbonate group, aliphatic cyclic anhydrides and aromatic cyclic anhydrides is initially placed in the reactor, and no H-functional starter substance is thereby initially placed in the reactor.

**3.** Process according to Claim 1, wherein in step (α) a suspending agent that does not contain H-functional groups

and is selected from one or more compound(s) from the group consisting of aliphatic lactones, aromatic lactones, lactides, cyclic carbonates having at least three optionally substituted methylene groups between the oxygen atoms of the carbonate group, aliphatic cyclic anhydrides and aromatic cyclic anhydrides, and additionally a partial amount of the H-functional starter substance(s) are initially placed in the reactor.

**4.** Process according to any one of Claims 1 to 3, wherein in step (α) a suspending agent that does not contain H-functional groups and is selected from one or more compound(s) from the group consisting of aliphatic lactones, aromatic lactones, lactides, cyclic carbonates having at least three optionally substituted methylene groups between the oxygen atoms of the carbonate group, aliphatic cyclic anhydrides and aromatic cyclic anhydrides is initially placed in the reactor together with DMC catalyst.

**5.** Process according to Claim 4, wherein, following step (α),

(β) a partial amount of alkylene oxide is added to the mixture from step (α) at temperatures of from 90 to 150°C, the addition of the alkylene oxide compound then being interrupted.

**6.** Process according to Claim 5, wherein step (β) is carried out under an inert gas atmosphere, under an atmosphere of an inert gas/carbon dioxide mixture or under a carbon dioxide atmosphere.

**7.** Process according to Claim 5, wherein in step (β)

(β1) in a first activation step the addition of a first partial amount of alkylene oxide under an inert gas atmosphere takes place, and
(β2) in a second activation step the addition of a second partial amount of alkylene oxide under a carbon dioxide atmosphere takes place.

**8.** Process according to any one of Claims 1 to 7, wherein in step (γ) one or more H-functional starter substance(s), one or more alkylene oxide(s) are metered in continuously in the presence of carbon dioxide ("copolymerisation").

**9.** Process according to any one of Claims 1 to 8, wherein in step (γ) the metered addition of the one or more H-functional starter substance(s) is ended, in terms of time, before the addition of the alkylene oxide.

**10.** Process according to Claim 8 or 9, wherein in step (γ) DMC catalyst is metered into the reactor continuously and the resulting reaction mixture is removed from the reactor continuously.

**11.** Process according to Claim 10, wherein the DMC catalyst is added continuously in suspension in H-functional starter compound.

**12.** Process according to Claim 10 or 11, wherein

(δ) the reaction mixture removed continuously in step (γ) having a content of from 0.05 wt.% to 10 wt.% alkylene oxide is transferred into a post-reactor in which the content of free alkylene oxide is reduced to less than 0.05 wt.% in the reaction mixture in the course of a post-reaction.

**13.** Process according to any one of Claims 1 to 12, wherein in step (α) there is used as the suspending agent at least one compound selected from the group consisting of
a compound of formula (II), (III), (IV) or (V)

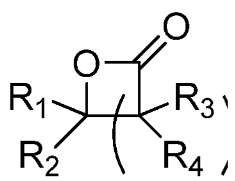

(II)

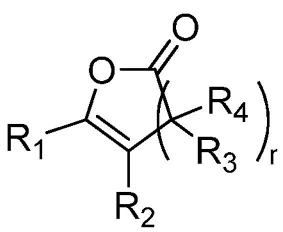

(III)

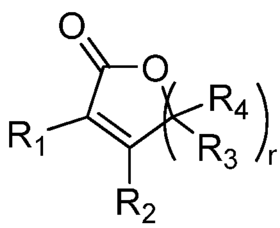

(IV)

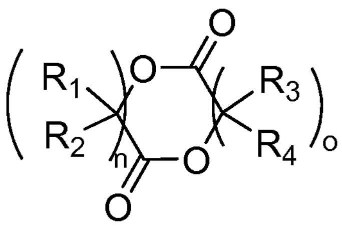

(V)

wherein

R1, R2, R3 and R4 independently of one another represent hydrogen, a linear or branched C1 to C22 alkyl radical, a linear or branched C1 to C22 alkenyl radical or a C6 to C18 aryl radical, or can be members of a 4- to 7-membered ring or polycyclic system optionally containing ether groups, wherein the compounds of formula (II) can also be substituted by chlorine, bromine, nitro groups or alkoxy groups,
m is an integer greater than or equal to 1,
and R3 and R4 in repeating units (m > 1) can be different,
and n and o independently of one another are an integer greater than or equal to 1, preferably 1, 2, 3 or 4,
and R1 and R2 in repeating units (n > 1) and R3 and R4 in repeating units (o > 1) can be different,

or a compound of formula (VI)

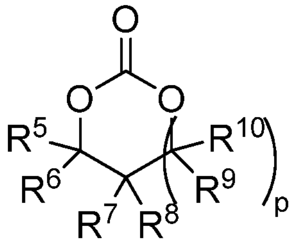

(VI)

wherein

R5, R6, R7, R8, R9 and R10 independently of one another represent hydrogen, a linear or branched C1 to C22 alkyl radical, a linear or branched C1 to C22 alkenyl radical or a C6 to C18 aryl radical, or can be members of a 4- to 7-membered ring or polycyclic system,
p is an integer greater than or equal to 1, preferably 1, 2 or 3,
and R9 and R10 in repeating units (p > 1) can be different,

and wherein the compounds of formula (VI) can also be substituted by chlorine, bromine, nitro groups or alkoxy groups,
or a compound of formula (VII), (VIII) or (IX)

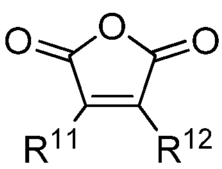

(VII)

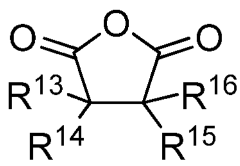

(VIII)

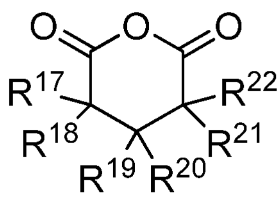

(IX)

wherein

R11 and R12 represent hydrogen, halogen, C1-C22-alkyl, C1-C22-alkenyl or C6-C18-aryl, or R11 and R12 can

be members of a 4- to 7-membered ring or polycyclic system, preferably R11 and R12 together form a benzene ring, R13, R14, R15 and R16 represent hydrogen, C1-C22-alkyl, C1-C22-alkenyl or C6-C18-aryl, or can be members of a 4- to 7-membered ring or polycyclic system,
R17, R18, R19, R20, R21 and R22 represent hydrogen, C1-C22-alkyl, C1-C22-alkenyl or C6-C18-aryl, or can be members of a 4- to 7-membered ring or polycyclic system,

and wherein the compounds of formulae (VII) and (VIII) and (IX) can also be substituted by chlorine, bromine, nitro groups or alkoxy groups.

**14.** Process according to any one of Claims 1 to 12, wherein in step (α) there is used as the suspending agent ε-caprolactone, dihydrocoumarin, trimethylene carbonate, neopentyl glycol carbonate, 3,6-dimethyl-1,4-dioxane-2,5-dione, succinic anhydride, maleic anhydride and phthalic anhydride and mixtures of two or more of those suspending agents.

**15.** Process according to any one of Claims 1 to 14, wherein the H-functional starter substance is selected from at least one of the group consisting of ethylene glycol, propylene glycol, 1,3-propanediol, 1,3-butanediol, 1,4-butanediol, 1,5-pentanediol, 2-methylpropane-1,3-diol, neopentyl glycol, 1,6-hexanediol, 1,8-octanediol, diethylene glycol, dipropylene glycol, glycerol, trimethylolpropane, pentaerythritol, sorbitol, and polyether polyols having a molecular weight Mn in the range of from 150 to 4500 g/mol and a functionality of from 2 to 3.

**Revendications**

**1.** Procédé pour la préparation de polyéthercarbonatepolyols par addition d'oxydes d'alkylène et de dioxyde de carbone sur une ou plusieurs substances de départ à fonctionnalité H en présence d'un catalyseur de type cyanure métallique double (DMC), **caractérisé en ce que**

(α) un agent de mise en suspension, qui ne contient pas de groupes à fonctionnalité H et qui est choisi parmi un ou plusieurs composés du groupe constitué par les lactones aliphatiques, les lactones aromatiques, les lactides, les carbonates cycliques présentant au moins trois groupes méthylène le cas échéant substitués entre les atomes d'oxygène du groupe carbonate, les anhydrides cycliques aliphatiques et les anhydrides cycliques aromatiques, est disposé au préalable dans un réacteur et
(γ) une ou plusieurs substances de départ à fonctionnalité H sont dosées en continu dans le réacteur pendant la réaction.

**2.** Procédé selon la revendication 1, dans lequel, dans l'étape (α), un agent de mise en suspension, qui ne contient pas de groupes à fonctionnalité H et qui est choisi parmi un ou plusieurs composés du groupe constitué par les lactones aliphatiques, les lactones aromatiques, les lactides, les carbonates cycliques présentant au moins trois groupes méthylène le cas échéant substitués entre les atomes d'oxygène du groupe carbonate, les anhydrides cycliques aliphatiques et les anhydrides cycliques aromatiques, est disposé au préalable dans un réacteur et aucune substance de départ à fonctionnalité H n'est ainsi disposée au préalable dans le réacteur.

**3.** Procédé selon la revendication 1, dans lequel, dans l'étape (α), un agent de mise en suspension, qui ne contient pas de groupes à fonctionnalité H et qui est choisi parmi un ou plusieurs composés du groupe constitué par les lactones aliphatiques, les lactones aromatiques, les lactides, les carbonates cycliques présentant au moins trois groupes méthylène le cas échéant substitués entre les atomes d'oxygène du groupe carbonate, les anhydrides cycliques aliphatiques et les anhydrides cycliques aromatiques, et en outre une quantité partielle de la/des substances de départ à fonctionnalité H sont disposés au préalable dans le réacteur.

**4.** Procédé selon l'une quelconque des revendications 1 à 3, dans lequel, dans l'étape (α), un agent de mise en suspension, qui ne contient pas de groupes à fonctionnalité H et qui est choisi parmi un ou plusieurs composés du groupe constitué par les lactones aliphatiques, les lactones aromatiques, les lactides, les carbonates cycliques présentant au moins trois groupes méthylène le cas échéant substitués entre les atomes d'oxygène du groupe carbonate, les anhydrides cycliques aliphatiques et les anhydrides cycliques aromatiques, est disposé au préalable, ensemble avec le catalyseur DMC, dans le réacteur.

**5.** Procédé selon la revendication 4, dans lequel, après l'étape (α),

(β) on ajoute au mélange de l'étape (α) une quantité partielle d'oxyde d'alkylène à des températures de 90 à 150°C et l'addition du composé d'oxyde d'alkylène étant ensuite interrompue.

**6.** Procédé selon la revendication 5, dans lequel l'étape (β) est réalisée sous une atmosphère de gaz inerte, sous une atmosphère de mélange de gaz inerte-dioxyde de carbone ou sous une atmosphère de dioxyde de carbone.

**7.** Procédé selon la revendication 5, dans lequel, dans l'étape (β),

(β1) dans une première étape d'activation, l'addition d'une première quantité partielle d'oxyde d'alkylène est réalisée sous une atmosphère de gaz inerte et
(β2) dans une deuxième étape d'activation, l'addition d'une deuxième quantité partielle d'oxyde d'alkylène est réalisée sous une atmosphère de dioxyde de carbone.

**8.** Procédé selon l'une quelconque des revendications 1 à 7, dans lequel, dans l'étape (γ), une ou plusieurs substances de départ à fonctionnalité H, un ou plusieurs oxydes d'alkylène sont dosés en continu en présence de dioxyde de carbone ("copolymérisation").

**9.** Procédé selon l'une quelconque des revendications 1 à 8, dans lequel, dans l'étape (γ), le dosage d'une ou de plusieurs substances de départ à fonctionnalité H est terminé, dans le temps, avant l'addition de l'oxyde d'alkylène.

**10.** Procédé selon la revendication 8 ou 9, dans lequel, dans l'étape (γ), le catalyseur DMC est dosé en continu dans le réacteur et le mélange réactionnel résultant est éliminé en continu du réacteur.

**11.** Procédé selon la revendication 10, dans lequel le catalyseur DMC est ajouté en continu en suspension dans le composé de départ à fonctionnalité H.

**12.** Procédé selon la revendication 10 ou 11, dans lequel

(δ) le mélange réactionnel éliminé en continu dans l'étape (γ), présentant une teneur de 0,05% en poids à 10% en poids d'oxyde d'alkylène, est transféré dans un post-réacteur dans lequel, dans le sens d'une post-réaction, la teneur en oxyde d'alkylène libre est réduite à moins de 0,05% en poids dans le mélange réactionnel.

**13.** Procédé selon l'une quelconque des revendications 1 à 12, dans lequel, dans l'étape (α), on utilise, comme agent de mise en suspension, au moins un composé choisi dans le groupe constitué par un composé des formules (II), (III), (IV) ou (V),

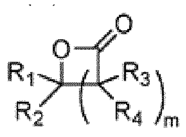

(II)

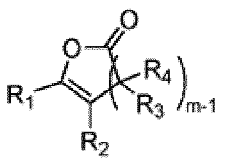

(III)

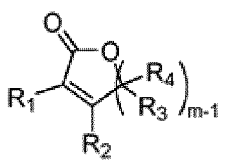

(IV)

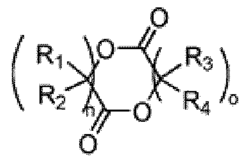

(V)

dans lesquelles

R1, R2, R3 et R4 représentent, indépendamment les uns des autres, hydrogène, un radical C1-C22-alkyle linéaire ou ramifié, un radical C1-C22-alcényle linéaire ou ramifié ou un radical C6-C18-aryle ou peuvent être des chaînons d'un cycle ou d'un système polycyclique de 4 à 7 chaînons contenant le cas échéant des groupes éther, les composés de formule (II) pouvant également être substitués par chlore, brome, des groupes nitro ou

des groupes alcoxy,
m vaut un nombre entier supérieur à 1 et
R3 et R4 peuvent à chaque fois être différents dans des unités récurrentes (m > 1), et
n et o valent, indépendamment l'un de l'autre, un nombre entier supérieur ou égal à 1, de préférence 1, 2, 3 ou 4, et R1 et R2, dans des unités récurrentes (n > 1), et R3 et R4, dans des unités récurrentes (o > 1), peuvent à chaque fois être différents,

ou un composé de formule (VI),

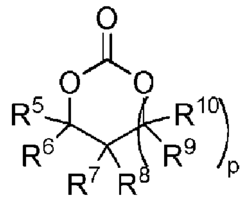

(VI)

dans laquelle

R5, R6, R7, R8, R9 et R10 représentent, indépendamment les uns des autres, hydrogène, un radical C1-C22-alkyle linéaire ou ramifié, un radical C1-C22-alcényle linéaire ou ramifié ou un radical C6-C18-aryle ou peuvent être des chaînons d'un cycle ou d'un système polycyclique de 4 à 7 chaînons,
p vaut un nombre entier supérieur ou égal à 1, de préférence 1, 2 ou 3, et R9etR10 dans des unités récurrentes (p > 1), peuvent être à chaque fois différents et les composés de formule (VI) pouvant également être substitués par chlore, brome, des groupes nitro ou des groupes alcoxy,

ou un composé de formule (VII), (VIII) ou (IX)

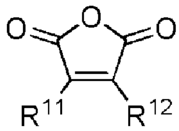

(VII)

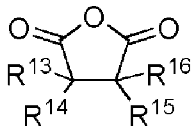

(VIII)

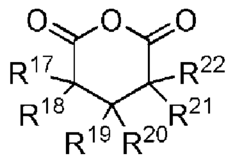

(IX)

dans lesquelles

R11 et R12 représentent hydrogène, halogène, C1-C22-alkyle, C1-C22-alcényle ou C6-C18-aryle ou R11 et R12 peuvent être des chaînons d'un cycle ou d'un système polycyclique de 4 à 7 chaînons, R11 et R12 formant de préférence ensemble un cycle benzène,
R13, R14, R15 et R16 représentent hydrogène, C1-C22-alkyle, C1-C22-alcényle ou C6-C18-aryle ou peuvent représenter des chaînons d'un cycle ou d'un système polycyclique de 4 à 7 chaînons et
R17, R18, R19, R20, R21 et R22 représentent hydrogène, C1-C22-alkyle, C1-C22-alcényle ou C6-C18-aryle ou peuvent représenter des chaînons d'un cycle ou d'un système polycyclique de 4 à 7 chaînons et les composés de formule (VII) et (VIII) et (IX) pouvant également être substitués par chlore, brome, des groupes nitro ou des groupes alcoxy.

**14.** Procédé selon l'une quelconque des revendications 1 à 12, dans lequel, dans l'étape ($\alpha$), on utilise, comme agent de mise en suspension, l'$\varepsilon$-caprolactone, la dihydrocoumarine, le carbonate de triméthylène, le carbonate de néopentylglycol, la 3,6-diméthyl-1,4-dioxane-2,5-dione, l'anhydride de l'acide succinique, l'anhydride de l'acide maléique et l'anhydride de l'acide phtalique ainsi que des mélanges de deux de ces agents de mise en suspension ou plus.

**15.** Procédé selon l'une quelconque des revendications 1 à 14, dans lequel la substance de départ à fonctionnalité H est choisie parmi au moins une du groupe constitué par l'éthylèneglycol, le propylèneglycol, le 1,3-propanediol, le 1,3-butanediol, le 1,4-butanediol, le 1,5-pentanediol, le 2-méthylpropane-1,3-diol, le néopentylglycol, le 1,6-hexanediol, le 1,8-octanediol, le diéthylèneglycol, le dipropylèneglycol, le glycérol, le triméthylolpropane, le pentaérythritol,

le sorbitol et les polyétherpolyols présentant un poids moléculaire Mn dans la plage de 150 à 4500 g/mole et une fonctionnalité de 2 à 3.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 0222453 A
- WO 2003029325 A
- WO 2008092767 A
- US 2011230580 A1
- EP 1359177 A
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- JP 4145123 B
- WO 0139883 A
- WO 0180994 A


### In der Beschreibung aufgeführte Nicht-Patentliteratur


- **B. INOUE et al.** Copolymerization of Carbon Dioxide and Epoxide with Organometallic Compounds. *Die Makromolekulare Chemie,* 1969, vol. 130, 210-220